# EUROPEAN PATENT APPLICATION

(11) **EP 2 264 819 A1**
(43) Date of publication of application: **22.12.2010**
(21) Application number: 09721069.4
(22) Date of filing: 11.03.2009
(51) Int. Cl.: H01M 8/04, H01M 8/06, H01M 8/10

(54) **FUEL CELL SYSTEM AND METHOD OF OPERATING THE SAME**

(30) Priority: 11.03.2008 JP 2008061584; 12.09.2008 JP 2008235288
(71) Applicant: Panasonic Corporation, Kadoma-shi Osaka 571-8501 (JP)
(72) Inventor: MUTA Aoi c/o Panasonic Corporation, Chuo-ku Osaka-shi Osaka 540-6207 (JP); TSUJI Yoichiro c/o Panasonic Corporation, Chuo-ku Osaka-shi Osaka 540-6207 (JP)
(74) Representative: Leinweber & Zimmermann
(86) International application number: PCT/JP2009/001094
(87) International publication number: WO 2009/113305

(57) **Abstract**

A fuel cell system (100a) includes a fuel cell (11), a fuel gas supplier (16) configured to supply a fuel gas; an oxidizing gas supplier (17) configured to supply an oxidizing gas, and a controller (20), and further includes a moisture supply mechanism (27, 28, 29) configured to supply moisture to at least one of an anode and a cathode of the fuel cell, wherein the controller is configured to control the moisture supply mechanism based on at least one of either a dew point of the fuel gas or information related to the dew point and either a dew point of the oxidizing gas or information related to the dew point as to increase at least either the dew point of the fuel gas or the dew point of the oxidizing gas, in order to supply moisture to at least one of the anode or the cathode of the fuel cell before cutting off electric connection between the fuel cell and a load, and is configured to thereafter cut off the electric connection between the fuel cell and the load.

## Description

### TECHNICAL FIELD

The present invention relates to a fuel cell system including polymer electrolyte fuel cells configured to generate electric power using fuel gas containing hydrogen and oxidizing gas containing oxygen. This invention also relates to an operation method for such a fuel cell system.

In recent years, various studies have been conducted in an effort to find a way to accomplish the practical use of a fuel cell system (e.g., the practical use of the fuel cell system as an electric power generating system intended for a mobile object such as an electric vehicle, and a household cogeneration system) which at least includes a polymer electrolyte fuel cell, a fuel gas supplier for supplying fuel gas containing moisture (water and/or water vapor) to an anode of the polymer electrolyte fuel cell and an oxidizing gas supplier for supplying oxidizing gas containing moisture to a cathode of the polymer electrolyte fuel cell.

Of these studies conducted, the development of technologies for ensuring sufficient energy conversion efficiency of the fuel cell system is one of the important subjects to be studied. Therefore, as a fuel cell system and an operation method thereof able to secure sufficient energy conversion efficiency, there is proposed a fuel cell system operation method or a fuel cell system operated based thereon, wherein the fuel cell system is operated to generate electric power in a certain operational condition that meets the interrelations: Tcell > Tda and Tcell > Tdc (hereinafter, this operational condition is referred to as a "low humidification state" if necessary) where Tda is the fuel gas dew point, Tdc is the oxidizing gas dew point, and Tcell is the polymer electrolyte fuel cell's temperature.

On the other hand, in a method of operating a fuel cell system, there is no need to put the fuel cell system in operation when neither electric energy nor heat energy is required. Therefore, in a typical fuel cell system operation method, there is employed a start-up/shutdown operational mode in which the fuel cell system is started up whenever electric energy and heat energy are needed while on the other hand it is shut down whenever electric energy and heat energy are no longer needed.

Incidentally, in a fuel cell system that employs such a start-up/shutdown operational mode, the polymer electrolyte fuel cell changes its state from closed circuit state to open circuit state if the polymer electrolyte fuel cell in operation to generate electric power is shut down. Here, if, in the case where the fuel cell system is operated in a low humidification state, the polymer electrolyte fuel cell changes its state from closed circuit state to open circuit state in association with the shutdown of the electric power generation operation of the fuel cell system, the degradation of the polymer electrolyte membrane becomes considerably worse due to a change in the wet state of the polymer electrolyte membrane caused by the fact that water is no longer formed. As a result, in such a fuel cell system, fluoride ions, i.e., decomposed substances of the polymer electrolyte membrane, will be discharged from the anode and the cathode of the polymer electrolyte fuel cell due to the degradation of the polymer electrolyte membrane.

Therefore, with a view to solving this problem, there are proposed a fuel cell system which avoids a low humidification state in a shut down state of the power generation operation to prevent degradation of a polymer electrolyte membrane and an operation method thereof (for example, see Patent Document 1). Patent document 1 discloses that when bringing the electric power generation operation of the fuel cell system to a stop from a state in which it is being operated in the low humidification state, either the fuel gas dew point or the oxidizing gas dew point is controlled so that at least either the fuel gas dew point or the oxidizing gas dew point is made to conform to the temperature of the polymer electrolyte fuel cell. Thereafter, the water content in the polymer electrolyte membrane is controlled by cutting off the electric connection between the polymer electrolyte fuel cell and an electric load.

On the other hand, there has been disclosed a configuration in which, in carbon monoxide removing device mounted in a fuel cell system, the air humidified (oxidizing gas) is supplied to a fuel cell, and a part of the gas remaining unconsumed there and discharged as the cathode exhaust gas, is introduced into a selective oxidation reactor. Here, in a polymer electrolyte fuel cell, the reaction of oxygen and hydrogen in the vicinity of the cathode forms water. Therefore, the oxygen content of air discharged from the polymer electrolyte fuel cell lessens as compared to its initial oxygen content, and the air becomes a water vapor-rich cathode exhaust gas whose nitrogen content has been increased with respect to the oxygen content thereof Therefore, in this carbon monoxide removing device, by the introduction of cathode exhaust gas into the selective oxidation reactor, carbon monoxide and oxygen in a reactant gas are attenuated simultaneously with increasing the heat capacity of the reactant gas, whereby it becomes possible to avoid a drop in the reaction efficiency caused by rapid development of the selective oxidation reaction in the vicinity of the gas inlet port of the reactor (for example, see Patent Document 2).
Patent Document 1: WO 2007/046483 A1
Patent Document 2: Japanese Patent No. 3732004 Publication

### DISCLOSURE OF THE INVENTION

### PROBLEMS TO BE SOLVED BY THE INVENTION

However, the proposal, as set forth above in Patent Document 1, requires that, when controlling the dew point of fuel gas, there should be a change in the operational condition of a reformer mounted in the fuel gas supplier. Alternatively, this proposal requires that, in order to control the dew point of fuel gas, there should be a change in the operational condition of a humidifier placed between the fuel gas supplier and the polymer electrolyte fuel cell.

However, in the case where the dew point of fuel gas is controlled by making a change in the operational condition of the reformer of the fuel gas supplier, more specifically, in the case where the dew point of fuel gas is increased by making a change in the S/C (steam/carbon) ratio, the heat of the reformer is lost to added water. Therefore, if the dew point of fuel gas is controlled by making a change in the operational condition of the reformer, this causes a new problem that the reforming efficiency of the reformer will become lower.

Besides, in the case where the dew point of fuel gas is controlled by making a change in the operational condition of the humidifier, it is required that the moisture should be newly supplied to the humidifier in order to obtain a supply gas higher in dew point than the exhaust gas discharged from the polymer electrolyte fuel cell, because of the configuration of the humidifier by which moisture present in the exhaust gas discharged from the polymer electrolyte fuel cell is transferred to the supply gas which is fed to the polymer electrolyte fuel cell. Therefore, if the dew point of fuel gas is controlled by making a change in the operational condition of the humidifier, this requires that a water passage for supplying the moisture to the humidifier should be newly provided, and it is therefore anticipated that the costs will increase and the system will become complicated.

On the other hand, if, in the carbon monoxide removing device mounted in the fuel cell system as set forth above in Patent Document 2, cathode exhaust gas discharged from the fuel cell is introduced into the selective oxidation reactor, this means that moisture is given to the reactant gas in the selective oxidation reactor. However, this technology is intended to suppress the selective oxidation reaction from rapid development by attenuating carbon monoxide and oxygen in the reactant gas while increasing the heat capacity of the reactant gas, and it is therefore presumed that this technology is intended mainly for use during the electric power generation operation in which the fuel gas is supplied to the fuel cell. That is to say, the proposal as set forth above in Patent document 2 is not intended for the humidification of the polymer electrolyte membrane during the non electric power generation operation of the fuel cell and no mention is made at all of this.

The present invention was made with a view to providing solutions to the above-mentioned problems. Accordingly, an object of the present invention is to provide a fuel cell system with high durability, which is capable of preventing degradation of a polymer electrolyte membrane during transition of a polymer electrolyte fuel cell being operated in a low humidification state to an open circuit state by controlling a fuel gas dew point with a simple configuration, and an operation method thereof

### MEANS FOR OVERCOMING THE PROBLEMS

Through a series of their research efforts dedicated to accomplishing the above-mentioned object, the inventors of the present patent application attained the present invention from their discovery of the fact that it is preferable, in a fuel cell system including a polymer electrolyte fuel cell, to control and cause at least the dew point of either fuel gas or oxidizing gas supplied to the fuel cell to increase before cutting off the electrical connection of the polymer electrolyte fuel cell with an electric load and, thereafter, to cut off the electric connection between the polymer electrolyte fuel cell and the electric load.
That is to say, the present invention provides a fuel cell system and its operating system. More specifically, the fuel cell system according to the present invention comprises a fuel cell system comprising: a fuel cell configured to generate electric power using fuel gas containing hydrogen and oxidizing gas containing oxygen; a fuel gas supplier configured to supply the fuel gas to the fuel cell; an oxidizing gas supplier configured to supply the oxidizing gas to the fuel cell; and a controller configured to at least control the fuel cell, the fuel gas supplier and the oxidizing gas supplier; wherein the fuel cell system further comprises a moisture supply mechanism configured to supply moisture to at least one of an anode and a cathode of the fuel cell; and wherein the controller is configured to control the moisture supply mechanism based on at least one of either a dew point of the fuel gas or information related to the dew point of the fuel gas and either a dew point of the oxidizing gas or information related to the dew point of the oxidizing gas so as to increase at least one of the dew point of the fuel gas and the dew point of the oxidizing gas, in order to supply the moisture to at least one of the anode and the cathode of the fuel cell before cutting off electric connection between the fuel cell and a load, and is configured to thereafter cut off the electric connection between the fuel cell and the load.

In such a configuration, in the process of shutting down the electric power generation operation of the fuel cell system, the moisture is properly supplied to the fuel cell. This properly increases at least one of the fuel gas dew point and the oxidizing gas dew point. Therefore, the moisture content of the polymer electrolyte membrane can be relatively and properly increased by a simple configuration whereby it becomes possible to suppress the degradation of the polymer electrolyte membrane. This makes it possible to provide a fuel cell system having high durability.
In this case, the fuel gas supplier comprises: a reformer configured to generate a fuel gas containing carbon monoxide using a raw material through a reforming reaction, a shift converter configured to decrease carbon monoxide in the fuel gas generated in the reformer through a shift reaction, and a selective oxidation unit configured to further decease the carbon monoxide in the fuel gas with its carbon monoxide decreased in the shift converter through a selective oxidation reaction, wherein the moisture supply mechanism is a selective oxidation moisture supply mechanism configured to supply moisture to the selective oxidation unit.

In such a configuration, the moisture is supplied by the selective oxidation moisture supply mechanism to the selective oxidation unit. This makes it possible to suppress the degradation of the polymer electrolyte membrane in the fuel cell system provided with the fuel gas supplier.

In this case, wherein the selective oxidation unit comprises: a selective oxidation air supply path used for supplying selective oxidation air to the fuel gas with its carbon monoxide decreased in the shift converter; a mixing section configured to mix the selective oxidation air delivered through the selective oxidation air supply path and the fuel gas with its carbon monoxide decreased in the shift converter; and a selective oxidation catalytic unit configured to, using a mixture gas of the fuel gas and the selective oxidation air, obtained by mixing in the mixing section, reduce the carbon monoxide in the mixture gas through the selective oxidation reaction, wherein the selective oxidation moisture supply mechanism is configured to supply the moisture to either the selective oxidation air supply path or to the mixing section.

In such a configuration, the moisture is supplied to either the selective oxidation air supply path or the mixing section, thereby making it possible to provide well mixing of fuel gas discharged from the shift converter with moisture. This makes it possible to properly increase the fuel gas dew point.

In this case, wherein the selective oxidation moisture supply mechanism includes: a water tank configured to store water; a moisture supply path for providing communication between the water tank and the selective oxidation unit; and a moisture content regulation unit disposed in the moisture supply path.

In such a configuration, it becomes possible to construct a selective oxidation moisture supply mechanism using a relatively simple configuration including a water tank, a moisture supply path and a moisture content regulation unit. This makes it possible to avoid the fuel cell system from becoming complicated in its configuration.

Besides, in the above-mentioned case, the fuel cell system further comprise a selective oxidation air supply unit configured to supply selective oxidation air to the selective oxidation unit, and wherein the selective oxidation moisture supply mechanism includes: a cathode off-gas bypass path used for supplying cathode off-gas containing unused oxidizing gas discharged from the fuel cell, to the selective oxidation unit; and a selective oxidation air regulation unit configured to supply at least one of the cathode off-gas delivered through the cathode off-gas bypass path and the selective oxidation air supplied from the selective oxidation air supply unit, to the selective oxidation unit.

In such a configuration, during the shutdown operation of the fuel cell, the selective oxidation unit of the fuel gas supplier is supplied with cathode off-gas containing oxidizing gas discharged from the fuel cell while maintaining the electric power generation of the fuel cell, whereby the dew point of fuel gas which is supplied to the fuel cell can be increased properly. In addition, the cathode off-gas contains water (water vapor) formed by electrochemical reaction of fuel gas and oxidizing gas in the fuel cell, and this water is utilized as the water to increase the dew point of fuel gas in the selective oxidation unit, in other words the increase in the fuel gas dew point can be accomplished by a simple configuration. As a result of this, the moisture content of the polymer electrolyte membrane of the fuel cell during the non electric power generation can be increased relatively as compared to during the electric power generation, thereby making it possible to suppress the degradation of the polymer electrolyte membrane. This makes it possible to enhance the durability of the fuel cell system.
Besides, in the above-mentioned case, the fuel cell system further comprises: a selective oxidation air supply unit configured to supply selective oxidation air to the selective oxidation unit, wherein the controller is configured to control at least one of the selective-oxidization air supply unit and the selective oxidation moisture supply mechanism to make the temperature of the selective oxidation unit equal to or higher than a predetermined threshold, when controlling the selective oxidation moisture supply mechanism so that the moisture is supplied to the selective oxidation unit.

In such a configuration, when the selective oxidation moisture supply mechanism is controlled so that the moisture is supplied to the selective oxidation unit, the air is supplied to the selective oxidation unit, for example, from the selective oxidation air supply unit to thereby suppress the drop in the temperature of the selective oxidation unit, whereby it becomes possible to prevent the efficiency of cutting down the carbon monoxide from dropping. This makes it possible to ensure the quality of fuel gas discharged from the selective oxidation unit.

Besides, in the above-mentioned case, the controller is configured to perform control to cause the selective oxidation unit to be filled therein with the fuel gas, after cutting off the electric connection between the fuel cell and the load.

In such a configuration, the inside of the selective oxidation unit is filled up with fuel gas after the electric connection between the fuel cell and the load is cut off, whereby the moisture content within the selective oxidation unit can be reduced. In this way, by the drying of the inside of the selective oxidation unit and the removal of moisture, it becomes possible to suppress the degradation of the selective oxidation catalyst.

Besides, in the above-mentioned case, the fuel cell system further comprises a water tank for storing water; a second moisture supply path for providing communication between the water tank and at least one of the anode and the cathode of the fuel cell; and a second moisture content regulation unit disposed in the second moisture supply path, wherein the moisture supply mechanism is a fuel-cell moisture supply mechanism configured to supply the moisture from the water tank to at least one of the anode and the cathode of the fuel cell.

In such a configuration, at least one of the anode and the cathode of the fuel cell is supplied with moisture directly from the water tank, whereby the degradation of the polymer electrolyte membrane can be suppressed even in a fuel cell system as a drive electric power source, for example, for use in an electric vehicle which is equipped with a hydrogen cylinder in place of a fuel gas supplier.

In this case, the fuel cell system further comprises: a temperature control device configured to control a temperature of the fuel cell; an annular heating medium path used for circulating a heating medium between the temperature control device and the fuel cell to transfer heat from the fuel cell to the temperature control device; and a heat exchanger; wherein the heat exchanger is configured to exchange heat between the annular heating medium path and the second moisture supply path

In such a configuration, heat is exchanged by the heat exchanger between the heating medium path and the second moisture supply path, thereby making it possible to effectively use the heat of the fuel cell during the shutdown operation of the fuel cell system Besides, while increasing at least one of the fuel gas dew point and the oxidizing gas dew point, the drop in the temperature of the fuel cell is expedited and, therefore, it becomes possible to reduce the standby time until the electric connection between the fuel cell and the electric load is cut off.

Besides, in this case, the fuel gas supplier comprises: a reformer configured to generate a fuel gas containing carbon monoxide using a raw material through a reforming reaction; and a heat exchanger; wherein the heat exchanger is configured to exchange heat between the reformer and the second moisture supply path.

In such a configuration, heat is exchanged by the exchanger between the reformer and the second moisture supply path, thereby making it possible to effectively utilize the heat of the reformer during the shutdown operation of the fuel cell system. Besides, the drop in the temperature of the reformer is expedited, thereby making it possible to reduce the standby time until the electric connection between the fuel cell and the electric load is cut off

Besides, in the above-mentioned case, the controller is configured to perform control such that the dew point of the fuel gas and the dew point of the oxidizing gas are lower than the temperature of the fuel cell, during an electric power generation operation of the fuel cell system.

In such a configuration, the fuel cell of the fuel cell system generates electric power in the low humidification state and, therefore, the energy conversion efficiency becomes improved. Besides, the polymer electrolyte membrane of the fuel cell which generates electric power in the low humidification state will be suitably moisturized during the non electric power generation.

Besides, in the above-mentioned case, the controller is configured to control the moisture supply mechanism based on at least one of either the dew point of the fuel gas or the information related to the dew point of the fuel gas and either the dew point of the oxidizing gas or the information related to the dew point of the oxidizing gas so as to increase at least one of the dew point of the fuel gas and the dew point of the oxidizing gas to cause the temperature of the fuel cell to conform to the dew point of at least one of the fuel gas and the oxidizing gas, in order to supply the moisture to at least one of the anode and the cathode of the fuel cell before cutting off the electric connection between the fuel cell and the load, and is configured to thereafter cut off the electric connection between the fuel cell and the load.

Alternatively, in the above-mentioned case, wherein the controller is configured to control the moisture supply mechanism based on at least one of either the dew point of the fuel gas or the information related to the dew point of the fuel gas and either the dew point of the oxidizing gas or the information related to the dew point of the oxidizing gas so as to increase at least one of the dew point of the fuel gas and the dew point of the oxidizing gas, in order to supply the moisture to at least one of the anode and the cathode of the fuel cell before cutting off the electric connection between the fuel cell and the load; and wherein the controller is configured to perform control such that the dew point of at least one of the fuel gas and the oxidizing gas is equal to or higher than the temperature of the fuel cell, when cutting off electric connection between the fuel cell and the load.

In such a configuration, either the dew point of fuel gas or the dew point of oxidizing gas within the fuel cell becomes higher than or equal to the temperature of the fuel cell during the shutdown operation and the shutdown of the fuel cell system, whereby the polymer electrolyte membrane of the fuel cell is well humidified by moisture contained in at least one of the fuel gas and the oxidizing gas. Therefore, it becomes possible to contribute to the improvement in the durability of the fuel cell by suppressing the degradation of the polymer electrolyte membrane.

### ADVANTAGEOUS EFFECTS OF THE INVENTION

In accordance with the configurations of the fuel cell systems and the operation methods thereof according to the present invention, it becomes possible to provide a fuel cell system having high durability and capable of preventing, by controlling the dew point of fuel gas using a simple configuration, the polymer electrolyte membrane from undergoing degradation when the polymer electrolyte fuel cell, which is operated in a low humidification state, changes its state to the open circuit state.

### BRIEF DESCRIPTION OF THE DRAWINGS

[Fig.1] Fig. 1 is a cross sectional view schematically illustrating a cross sectional structure of a fuel cell mounted in a fuel cell system according to a first embodiment of the present invention.
[Fig.2] Fig. 2 is a block diagram schematically illustrating a first configuration of the fuel cell system according to the first embodiment of the present invention.
[Fig.3] Fig. 3 is a block diagram schematically illustrating a second configuration of the fuel cell system according to the first embodiment of the present invention.
[Fig.4] Fig. 4 is a flow chart schematically representing a first characteristic operation of the fuel cell system according to the first embodiment of the present invention.
[Fig.5] Fig. 5 is a time chart schematically representing how the fuel cell temperature Tcell, the fuel gas dew point Tda, the oxidizing gas dew point Tdc, the selective oxidation unit temperature Tprox and the fuel cell output voltage Vfc each vary in the first characteristic operation of the fuel cell system according to the first embodiment of the present invention.
[Fig.6] Fig. 6 is a flow chart schematically representing a second characteristic operation of the fuel cell system according to the first embodiment of the present invention.
[Fig.7] Fig. 7 is a time chart schematically representing how the fuel cell temperature Tcell, the fuel gas dew point Tda, the oxidizing gas dew point Tdc, the selective oxidation unit temperature Tprox and the fuel cell output voltage Vfc each vary in the second characteristic operation of the fuel cell system according to the first embodiment of the present invention.
[Fig.8] Fig. 8, comprised of a perspective view and a top plan view, schematically depicts a concrete configuration of a selective oxidation unit according to the first embodiment of the present invention.
[Fig.9] Fig. 9 is a block diagram schematically illustrating a first configuration of a fuel cell system according to a second embodiment of the present invention.
[Fig.10] Fig. 10 is a block diagram schematically illustrating a second configuration of the fuel cell system according to the second embodiment of the present invention.
[Fig.11] Fig. 11 is a flow chart schematically representing a characteristic operation of the fuel cell system according to the second embodiment of the present invention.
[Fig.12] Fig. 12 is a time chart schematically representing how the fuel cell temperature Tcell, the fuel gas dew point Tda, the oxidizing gas dew point Tdc, the oxidation unit temperature Tprox and the fuel cell output voltage Vfc each vary in the characteristic operation of the fuel cell system according to the second embodiment of the present invention.
[Fig.13] Fig. 13 is a block diagram schematically illustrating a third configuration of the fuel cell system according to the second embodiment of the present invention.
[Fig.14] Fig. 14 is a block diagram schematically illustrating a first configuration of a fuel cell system according to a third embodiment of the present invention.
[Fig.15] Fig. 15 is a block diagram schematically illustrating a second configuration of the fuel cell system according to the third embodiment of the present invention.
[Fig.16] Fig. 16 is a block diagram schematically illustrating a first configuration of a fuel cell system according to a fourth embodiment of the present invention.
[Fig.17] Fig. 17 is a block diagram schematically illustrating a second configuration of the fuel cell system according to the fourth embodiment of the present invention.

### REFERENCE NUMERALS IN THE DRAWINGS

- 1: polymer electrolyte membrane
- 2a: catalytic reaction layer (on anode side)
- 2c: catalytic reaction layer (on cathode side)
- 3a: gas diffusion layer (on anode side)
- 3c: gas diffusion layer (on cathode side)
- 4a: anode
- 4c: cathode
- 5: MEA (membrane/electrode assembly)
- 6a: fuel gas passage
- 6c: oxidizing gas passage
- 7a: separator (one anode side)
- 7c: separator (on the cathode side)
- 8a,: 8c cooling water passage
- 9a,: 9c gasket
- 10: gasket
- 11: fuel cell (polymer electrolyte fuel cell)
- 12: fuel gas supply path
- 13: oxidizing gas supply path
- 14: anode off-gas discharge path
- 15: cathode off-gas discharge path
- 16: fuel gas supplier
- 17: oxidizing gas supplier
- 18: humidifier
- 19: temperature control device
- 20: controller
- 21a,21c: dew point sensor
- 22: temperature sensor
- 23: reformer
- 24: shift converter
- 25: selective oxidation unit
- 26: on-off valve (air supply mechanism)
- 27: on-off valve (water supply mechanism)
- 28: water supply pump
- 29: water tank
- 30: hydrogen cylinder
- 31: inner tube
- 32: outer tube
- 33: air supply unit
- 34: shift gas supply unit
- 35,36: mixing section
- 37: selective oxidation catalytic unit
- 38,39,40: aperture
- 41: on-off valve (hydrogen supply mechanism)
- 42: heat exchanger
- 43: first three-way valve (oxidizing gas supply path switch mechanism)
- 44: second three-way valve (oxidizing gas discharge switch mechanism)
- 45: third three-way valve
- 46: on-off valve
- 47: bypass path
- 48: oxidation-reaction oxidizing gas supply path
- 49: burner
- 50: fuel gas outlet port
- 51: oxidizing gas outlet port
- 52: selective gas supply unit
- 53: circulation path
- 54: cathode off-gas supply path
- 55: variable orifice
- 57: selective gas supply unit
- 58: fuel gas supply line
- 59: oxidizing gas supply line
- 60: fuel gas discharge line
- 61: oxidizing gas discharge line
- 62: output controller
- 100a-100i: fuel cell system
- 101: fuel cell
- 102: unit cell (cell)
- 103: selective oxidation unit

### BEST MODE FOR CARRYING OUT THE INVENTION

Hereinafter, the best modes for carrying out the present invention will be described in detail with reference to the accompanying drawings. In addition, it should be noted that, in the following description, the same or equivalent elements referred to throughout all the drawings are assigned the same reference numerals and their unnecessary repetition of the description will be omitted. Besides, in the following description, the polymer electrolyte fuel cell is referred to just as the "fuel cell". And, the fuel cell system including such a fuel cell is referred to just as the "fuel cell system". Furthermore, in the following description, the membrane/electrode assembly is referred to just as the "MEA".

Besides, in the specification, the term "moisture" means liquid water, gaseous water (that is, water vapor), liquid water-gaseous water mixture, or other like form of water. In addition, from the point of view of accomplishing the feature of the present invention that the dew point of fuel gas and the dew point of oxidizing gas are increased, it is possible that, instead of using liquid water, gaseous water, or a mixture of the two, solid water (i.e., ice) can be used as the "moisture" if the fuel cell system is configured suitably thereto (although not exemplarily described in the following description). Alternatively, substances that containing water molecules or substances capable of providing water molecules by, for example, chemical reaction may be used as the "moisture" if the fuel cell system is configured suitably thereto.

### FIRST EMBODIMENT

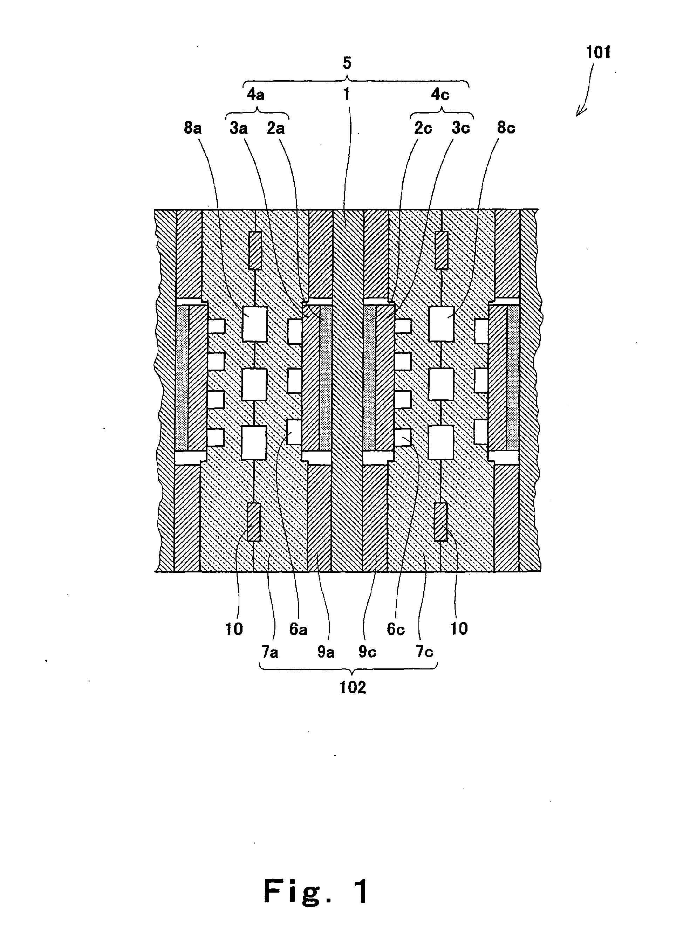

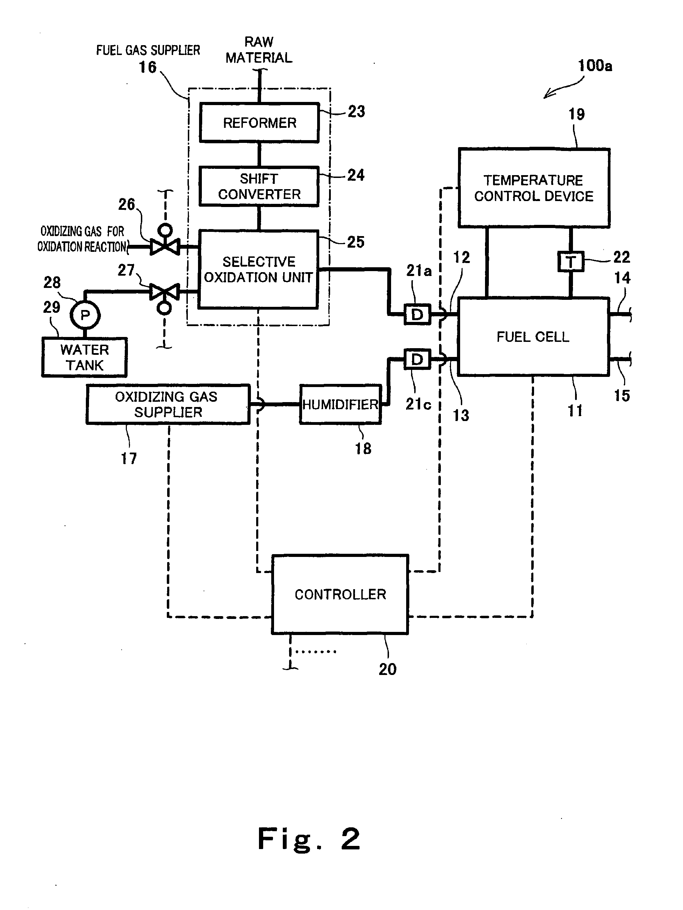

With reference first to Figs. 1 and 2, a configuration of a fuel cell system according to a first embodiment of the present invention will be described.

Fig. 1 is a cross sectional view schematically illustrating a cross sectional structure of a fuel cell provided in the fuel cell system according to the first embodiment of the present invention. It should be noted that Fig. 1 selectively diagrams only a principal section of the fuel cell necessary for providing a clear understanding of the basic configuration of the fuel cell.

As illustrated in Fig. 1, in a fuel cell 101 according to the first embodiment, an MEA 5 is sandwiched between a separator 7a and a separator 7c, with a pair of gaskets 9a and 9c disposed around the outer edge thereof This constitutes a unit cell 102 in the fuel cell 101. In addition, in the following description, the term "unit cell" will be referred to as the "cell" for the sake of simplification. And a plurality of such cells 102 are serially stacked in layers on upon the other to form a fuel cell 101.

Describing more concretely, Fig. 1 shows that the MEA 5 is provided with a proton conductive polymer electrolyte membrane 1. The polymer electrolyte membrane 1 selectively transports protons, when being in the moisture state. The proton transport capacity of the polymer electrolyte membrane 1 is achieved as follows. That is, fixed charges fixed to the polymer electrolyte membrane 1 in the moisture state are electrolytically dissociated, and hydrogen functioning as a counterion for the fixed charges is ionized to become movable. It is preferred that a perfluorocarbon sulfonic acid membrane, such as NAFION (registered trademark) of DuPont may be used as the polymer electrolyte membrane 1. As shown in Fig. 1, a catalytic reaction layer 2a and a catalytic reaction layer 2c, each formed mainly of carbon powder supporting a metallic catalyst of the platinum-based , are attached respectively to the centers of both the surfaces of the polymer electrolyte membrane 1 so that these layers are opposite to one another. In the catalytic reaction layer 2a of the catalytic reaction layers 2a and 2c, hydrogen, derived from fuel gas from the fuel gas supplier (not shown in Fig. 1), is converted into electrons and protons, as represented by the following chemical formula (1). Here, the electrons generated in the catalytic reaction layer 2a will reach, by way of an electric load (not shown in Fig. 1) connected to the fuel cell system, the catalytic reaction layer 2c. Besides, the protons generated in the catalytic reaction layer 2a will reach, through the polymer electrolyte membrane 1, the catalytic reaction layer 2c.

Meanwhile, in the catalytic reaction layer 2c of the fuel cell 101, the incoming electrons by way of the electric load, the protons permeating through the polymer electrolyte membrane 1 and the oxygen derived from oxidizing gas supplied from the oxidizing gas supplier (not shown in Fig. 1) are used to form water as expressed by the following chemical formula (2). With the development of this series of chemical reactions, the fuel cell 101 1 outputs electric power and, in addition, generates heat.

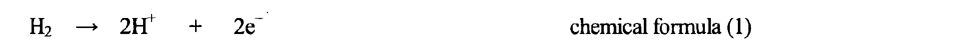

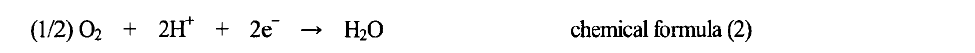

In addition, as shown in Fig. 1, a pair of a gas diffusion layer 3a and a gas diffusion layer 3c are disposed respectively on the surfaces of the catalytic reaction layers 2a and 2c which surfaces are not in contact with the polymer electrolyte membrane 1 so that these layers are opposite to one another. The gas diffusion layers 3a and 3c each combine permeability to fuel gas and oxidizing gas and conductivity, and are attached respectively to the surfaces of the catalytic reaction layers 2a and 2c so that these layers are electrically connected thereto.

And, in the fuel cell 101, the catalytic reaction layer 2a and the gas diffusion layer 3a together constitute an anode 4a. Besides, in a similar way, in the fuel cell 101, the catalytic reaction layer 2c and the gas diffusion layer 3c together constitute a cathode 4c. And, in the fuel cell 101, the polymer electrolyte membrane 1, the anode 4a and the cathode 4c together constitute an MEA 5.

On the other hand, as illustrated in Fig. 1, the polymer electrolyte membrane 1 of the MEA 5 is sandwiched between a gasket 9a and a gasket 9c each having electric insulating property and, further, these gaskets 9a and 9c are sandwiched between a separator 7a and a separator 7c each having electric conductive property. This configuration constitutes a cell 102 in the fuel cell 101. Here, in the cell 102, a fuel gas passage 6a is formed, in the surface of the cell 102 in contact with the gas diffusion layer 3a of the separator 7a, in the shape of a recess. The fuel gas passage 6a is used for supplying, to the gas diffusion layer 3a of the MEA 5, of fuel gas supplied from a fuel gas supplier and for discharging to outside the cell 102, of surplus fuel gas (anode off-gas). Besides, in this cell 102, an oxidizing gas passage 6c is formed, in the surface of the cell 102 in contact with the gas diffusion layer 3c of the separator 7c, in the shape of a recess. The oxidizing gas passage 6c is used for supplying, to the gas diffusion layer 3c of the MEA 5, of oxidizing gas supplied from an oxidizing gas supplier and for discharging, to outside the cell 102, of gas generated by catalytic reaction and surplus oxidizing gas (cathode off-gas). In addition, the separator 7a and the gas diffusion layer 3a are electrically connected to each other, and the separator 7c and the gas diffusion layer 3c are also electrically connected to each other.

And, as shown in Fig. 1, a plurality of cells 102 are electrically serially stacked in layers on upon the other to thereby constitute a fuel cell 101. In the fuel cell 101, a plurality of cells 102 are electrically serially stacked in layers one upon the other so that a separator 7a of one cell 102 and a separator 7c of the other cell 102 are mutually electrically connected together to obtain a desired output voltage. Here, in the fuel cell 101, recesses opposite to each other are formed respectively in a surface of the separator 7a in contact with the separator 7c and in a surface of the separator 7c in contact with the separator 7a, whereby a cooling water passage 8a and a cooling water passage 8c are provided. Besides, a gasket 10 is disposed between the separator 7a and the separator 7c for preventing leakage of cooling water distributed through the cooling water passages 8a and 8c. In addition, the cooling water passages 8a and 8 are supplied with cooling water from a cooling water supplier (not shown in Fig. 1), and the cooling water thus supplied is used to cool the fuel cell 101 which generates heat during its electric power generation operation. And, heat energy recovered from the fuel cell 101 by cooling water is used for supplying hot water.

Fig. 2 is a block diagram schematically illustrating a first configuration of the fuel cell system according to the first embodiment of the present invention. It should be noted that Fig. 2 selectively diagrams only constituent components necessary for describing the present invention, and the diagrammatic representation of the other remaining constituent components is omitted.

Referring to Fig. 2, there is shown a fuel cell system 100a according to the first embodiment of the present invention that has basically the same configuration as the configuration of a general fuel cell system of the conventional type.

More specifically, as shown in Fig. 2, the fuel cell system 100a according to the first embodiment of the present invention is provided, as a main part of its power generating section, with a fuel cell 11 which generates electric power when supplied with fuel gas and oxidizing gas. Besides, the fuel cell system 100a includes a fuel gas supplier 16 for supplying fuel gas to the fuel cell 11, an oxidizing gas supplier 17 for supplying oxidizing gas to the fuel cell 11, a humidifier 18 for humidifying oxidizing gas supplied from the oxidizing gas supplier 17 to the fuel cell 11 along the way thereto, a dew point sensor 21a for detecting the dew point of fuel gas, and a dew point sensor 21c for detecting the dew point of oxidizing gas. Besides, the fuel cell system 100a further includes a temperature control device 19 for controlling, by means of cooling medium, the temperature of the fuel cell 11 when it generates electric power upon the supply of fuel gas and oxidizing gas, and a temperature sensor 22 for detecting the temperature of cooling medium circulating between the temperature control device 19 and the fuel cell 11. Furthermore, the fuel cell system 100a includes a controller 20 which properly controls the operations of the fuel cell 11, the fuel gas supplier 16, the oxidizing gas supplier 17 and the temperature control device 19.

Here, as shown in Fig. 2, connected to the fuel cell 11 according to the present embodiment are: a fuel gas supply path 12 through which fuel gas is supplied, an oxidizing gas supply path 13 through which oxidizing gas is supplied, an anode off-gas discharge path 14 through which surplus fuel gas is discharged, and a cathode off-gas discharge path 15 through which surplus oxidizing gas is supplied. And, during the electric power generation operation of the fuel cell system 100a, the dew point of fuel gas generated by the fuel gas supplier 16 is detected by the dew point sensor 21a and, thereafter, the fuel gas is delivered to the fuel gas supply path 12 connected to the fuel cell 11. Besides, surplus fuel gas in the fuel cell 11 is discharged out from the anode off-gas discharge path 14 connected to the fuel cell 11. Meanwhile, oxidizing gas from the oxidizing gas supplier 17 is humidified in the humidifier 18 and, after its dew point is detected by the dew point sensor 21c, is delivered to the oxidizing gas supply path 13 connected to the fuel cell 11. Besides, surplus oxidizing gas in the fuel cell 11 is discharged out from the cathode off-gas discharge path 15 connected to the fuel cell 11.

In the present embodiment, the fuel gas supplier 16 uses a raw material (such as town gas, propane gas, or other like gas) to generate, in a reformer 23, a hydrogen-containing gas rich in hydrogen (hereinafter, referred to as the "fuel gas" for the sake of simplicity) by steam-reforming reaction. Here, the fuel gas generated in the reformer 23 is rich in hydrogen but contains much carbon monoxide harmful to the fuel cell 11. Therefore, in the present embodiment, the shift converter 24 of the fuel gas supplier 16 expedites a predetermined shift reaction, thereby reducing the content of carbon monoxide present in the fuel gas generated in the reformer 23. And, the fuel gas, whose carbon monoxide has been reduced in the shift converter 24, is then supplied to the selective oxidation unit 25. The fuel gas thus supplied is subjected to carbon monoxide removal by burning in the selective oxidation unit 25 to which oxidizing gas for oxidation reaction is supplied, and the resulting fuel gas after proper reduction in the carbon monoxide is delivered, as the fuel gas, to the fuel cell 11 from the fuel gas supplier 16.
Here, as shown in Fig. 2, the fuel cell system 100a according to the present embodiment is configured such that the oxidizing gas for oxidation reaction is supplied, via an on-off valve 26, to the selective oxidation unit 25. Besides, as shown in Fig. 2, the fuel cell system 100a is configured such that water stored in a water tank 29 is supplied, through a water supply pump 28 (which is a moisture content regulator) and then through an on-off valve 27, to the selective oxidation unit 25. In addition, as the water tank 29, tanks generally used in fuel cell systems (such as condensed water tanks for storing condensed water separated from anode off-gas and cathode off-gas, reform water tanks for storing reform water for the steam reforming reaction in the reformer, cooling water tanks for storing cooling water for the cooling of the fuel cell, and other similar tanks (not shown in Fig. 2)) may be recited.

In this way, in the present embodiment, the fuel gas is humidified in the steam reforming reaction and is supplied, in a water vapor containing state, to the fuel cell 11. This maintains the polymer electrolyte membrane (not shown in Fig. 2) of the fuel cell 11 in a predetermined wet state.
On the other hand, in the present embodiment, the oxidizing gas supplier 17 takes in air as the oxidizing gas for oxidation reaction from the atmosphere with the aid of, for example, a sirocco fan. And, the oxidizing gas supplier 17 delivers the air thus taken therein to the humidifier 18. Then, the humidifier 18 humidifies the air supplied thereto and, thereafter, delivers the humidified air to the fuel cell 11.

In the present embodiment, the dew point sensor 21a detects the dew point of fuel gas supplied to the fuel cell 11 from the fuel gas supplier 16. Besides, the dew point sensor 21 c detects the dew point of oxidizing gas supplied via the humidifier 18 to the fuel cell 11 from the oxidizing gas supplier 17. Here, in the present embodiment, the fuel gas dew point and the oxidizing gas dew point detected respectively by the dew point sensor 21 a and by the dew point sensor 21c are regarded respectively as the fuel gas dew point Tda and as the oxidizing gas dew point Tdc in the inside of the fuel cell 11. In addition, as the dew point sensors 21a and 21c, any type of dew point sensor may be employed as long as it has both durability against gases such as the fuel gas and the oxidizing gas and temperature durability. Besides, the fuel gas dew point Tda is dependent on the performance of the fuel gas supplier 16 and the oxidizing gas dew point Tdc is dependent on the performance of the humidifier 18. Therefore, the configuration may be that the dew point calculated based on the operational conditions of the fuel gas supplier 16 (parameters such as the flow rate of raw material, the amount of reform water, the reforming temperature et cetera) serves as the fuel gas dew point Tda while either the dew point calculated based on the operational conditions of the humidifier or the temperature of the humidifier 18 serves as the oxidizing gas dew point Tdc. In other words, in the present embodiment, it is possible to employ, instead of the configuration that employs the dew point sensors 21a and 21c, a configuration in which the fuel gas dew point and the oxidizing gas dew point are determined by means of existing control elements for driving the fuel gas supplier 16. Even when employing such configuration, it is still possible to properly determine the amounts of water and air that are supplied to the selective oxidation unit 25, as will be described later.

On the other hand, in the present embodiment, the temperature control device 19 is made up of, for example, a circulation pump for circulating cooling medium and a heat radiator (such as a cooling fin, a heat exchanger et cetera) for causing cooling medium in circulation to release heat therefrom. By the temperature control device 19, the cooling medium is supplied to the fuel cell 11, and the cooling medium, the temperature of which has been increased by heating by heat generated associated with the generation of electric power, is recovered from the fuel cell 11. Then the temperature control device 19 cools the temperature-increased cooling medium and then supplies the temperature-decreased cooling medium to the fuel cell 11 again. Alternatively, the temperature control device 19 causes, by making a change in at least one of the conditions, i.e., the flow rate and the temperature of cooling medium, the temperature of the fuel cell 11 to decrease. For example, it becomes possible to cool down the temperature of the fuel cell 11 by increasing the flow rate of cooling medium in the inside of the temperature control device 19. As a result of this, the temperature control device 19 maintains the temperature of the fuel cell 11 at a constant level of temperature. In addition, heat energy recovered from the fuel cell 11 by the cooling medium is used for supplying hot water or other like application.

Here, the temperature sensor 22, shown in Fig. 2, detects the temperature of cooling medium discharged to the temperature control device 19 from the fuel cell 11. In the present embodiment, the temperature of cooling medium detected by the temperature sensor 22 is regarded as the temperature of the fuel cell 11, Tcell. In addition, the temperature, Tcell, of the fuel cell 11 is the highest of the temperatures of the fuel cell 11. It is conceivable to use, as such a detection method, a method which measures the temperature of cooling medium supplied to the fuel cell 11, a method which directly measures, by means of a thermocouple, the temperature of a separator (not shown in Fig. 2) which composes the fuel cell 11, a method which measures the temperature of cooling medium discharged from the fuel cell 11, or other like method. On the other hand, the portion that has the highest of the temperatures of the fuel cell 11 is supposed to be an outlet port portion from which cooling medium fed from the inlet port will exit. Therefore, in the present embodiment, the configuration employed is that the temperature of cooling medium discharged to the temperature control device 19 from the fuel cell 11 is detected by the temperature sensor 22.

In addition, in the present embodiment, the low humidification state may be, for example, an operational condition in which: (the temperature at the cooling-medium inlet port portion of the fuel cell 11) ≤ Tda < (the temperature at the cooling-medium outlet port portion of the fuel cell 11, Tcell) and, in addition, (the temperature at the cooling-medium inlet port portion of the fuel cell 11) ≤ Tdc < (the temperature at the cooling-medium outlet port portion of the fuel cell 11, Tcell). Also even in this case where at least a part of the inside of the fuel cell 11 is being in the low humidification state, it is still possible to achieve the advantageous effects of the present invention.

Besides, in the present embodiment, the low humidification state may be, for example, an operational condition in which: Tda < (the temperature at the cooling-medium inlet port portion of the fuel cell 11) and, in addition, Tdc < (the temperature at the cooling-medium inlet port portion of the fuel cell 11). In this case, almost the entire area of the inside of the fuel cell 11 is placed in the low humidification state, whereby the advantageous effects of the present invention can be accomplished more significantly.

That is, in the present embodiment, the low humidification state may be, for example, an operational condition in which: (the temperature at the cooling-medium inlet port portion of the fuel cell 11) ≤ Tda < (the temperature at the cooling-medium inlet port portion of the fuel cell 11, Tcell) and, in addition, Tdc < (the temperature at the cooling-medium inlet port portion of the fuel cell 11). Alternatively, the low humidification state may be, for example, an operational condition in which: Tda < (the temperature at the cooling-medium inlet port portion of the fuel cell 11) ≤ Tdc < (the temperature at the cooling-medium outlet port portion of the fuel cell 11, Tcell). Also even in this case where at least a part of the inside of the fuel cell 11 is being in the low humidification state, it is still possible to achieve the advantageous effects of the present invention.

On the other hand, in the present embodiment, the controller 20 controls the operations of at least the fuel cell 11, the fuel gas supplier 16, the oxidizing gas supplier 17 and the temperature control device 19. The controller 20 includes, for example, an MPU (microprocessor unit) and a memory and properly controls, based on data such as programs, parameters et cetera prestored in the memory, the operations of at least the fuel cell 11, the fuel gas supplier 16, the oxidizing gas supplier 17 and the temperature control device 19. Here, in the present embodiment, the term "controller" means not only a single controller, but it also means a controller group composed of a plurality of controllers. Accordingly, the controller 20 may be made up of a single controller or may be composed of a plurality of controllers dispersedly configured for providing cooperative control.

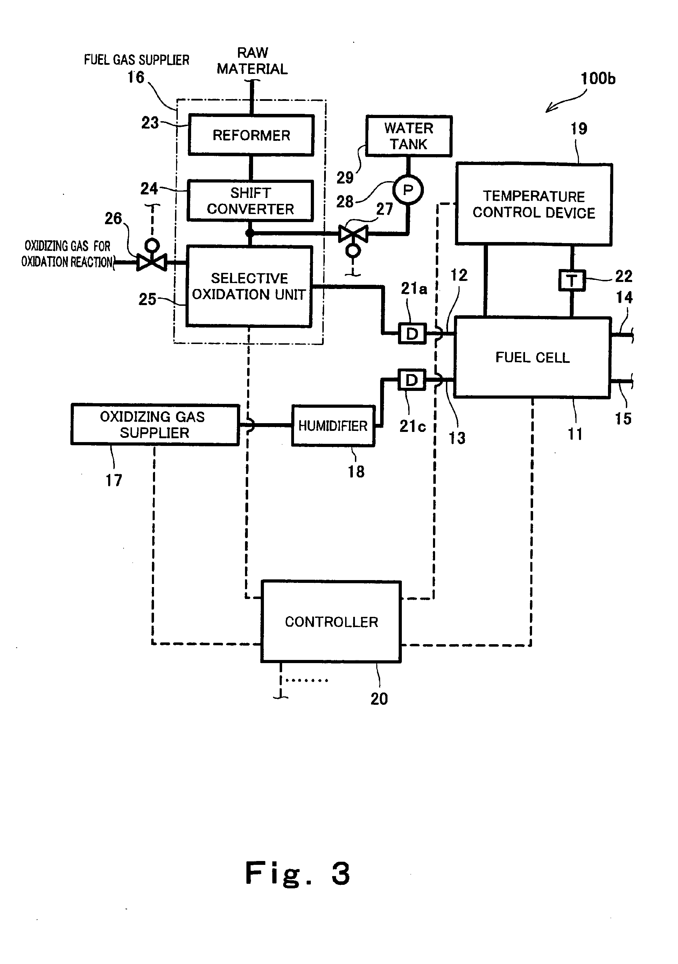

Next, referring to Fig. 3, a modification of the fuel cell system according to the first embodiment of the present invention will be described.

Fig. 3 is a block diagram schematically illustrating a second configuration of the fuel cell system according to the first embodiment of the present invention.

Fig. 3 shows a fuel cell system 100b according to the first embodiment of the present invention which has basically the same configuration as the configuration of the fuel cell system 100a (Fig. 2). That is, the fuel cell system 100b includes a fuel gas supplier 16, an oxidizing gas supplier 17, a humidifier 18, a dew point sensor 21a, a dew point sensor 21c, a fuel cell 11, a temperature control device 19 and a controller 20. And, the fuel cell system 100b is configured such that the fuel gas is supplied via the dew point sensor 21a to the fuel cell 11 from the fuel gas supplier 16 while the oxidizing gas is supplied, through the humidifier 18 and then through the dew point sensor 21c, to the fuel cell 11 from the oxidizing gas supplier 17. Besides, the fuel cell system 100b is configured such that the temperature of the fuel cell 11 is controlled by the temperature control device 19 while the operations of the fuel cell system 100b are properly controlled by the controller 20.

On the other hand, unlike the configuration of the fuel cell system 100a in which the water is supplied, through the water supply pump 28 and through the on-off valve 27, to the selective oxidation unit 25 of the fuel gas supplier 16 from the water tank 29, the fuel cell system 100b according to the present embodiment is configured such that the water is supplied, through the water supply pump 28 and then through the on-off valve 27, to the connecting piping of the shift converter 24 and the selective oxidation unit 25 from the water tank 29, as shown in Fig. 3. In addition, for the rest, the configuration is the same as in the fuel cell system 100a shown in Fig. 2.

Next, a description will be made with respect to characteristic operations of the fuel cell system according to the first embodiment of the present invention.

The operation of the fuel cell system 100a according to the present embodiment is the same as that of the conventional fuel cell system, with the exception that, prior to cutting off the electrical connection of the fuel cell 11, which is operated in a low humidification state, with the electric load (that is, before the fuel cell 11 is placed in the open circuit state), water is added to the selective oxidation unit 25 of the fuel gas supplier 16 to thereby properly control the dew point of fuel gas so that the polymer electrolyte membrane mounted in the fuel cell 11 is suitably humidified. Therefore, hereinafter, only the characteristic operations of the fuel cell system according to the present embodiment will be described in detail.

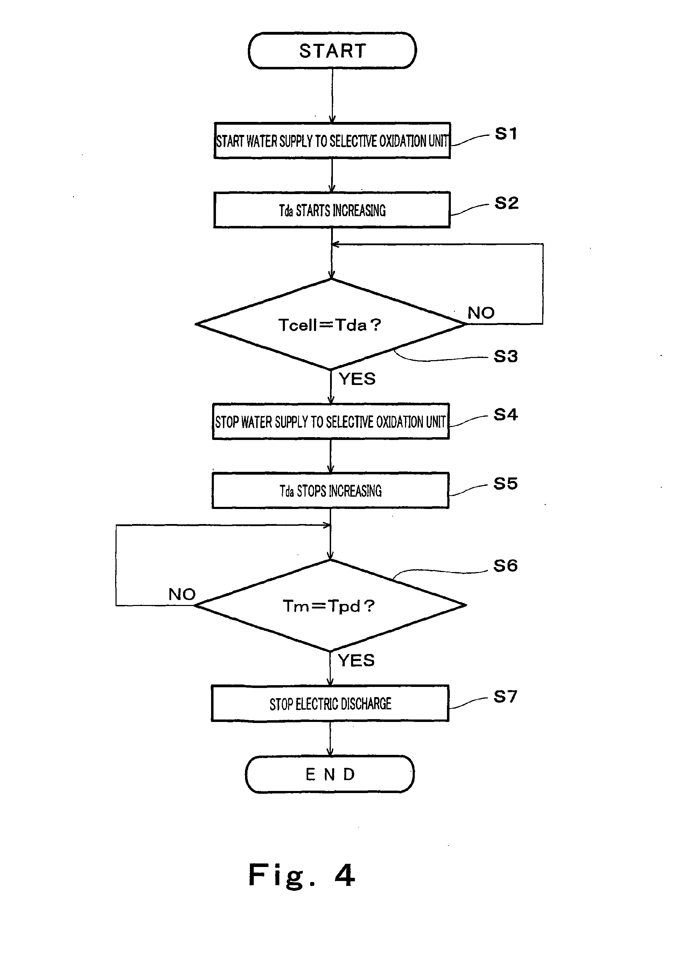

Fig. 4 is a flow chart schematically representing a first characteristic operation of the fuel cell system according to the first embodiment of the present invention. It should be noted that Fig. 4 selectively represents only steps necessary for describing the present invention, and the diagrammatic representation of the other remaining steps is omitted.

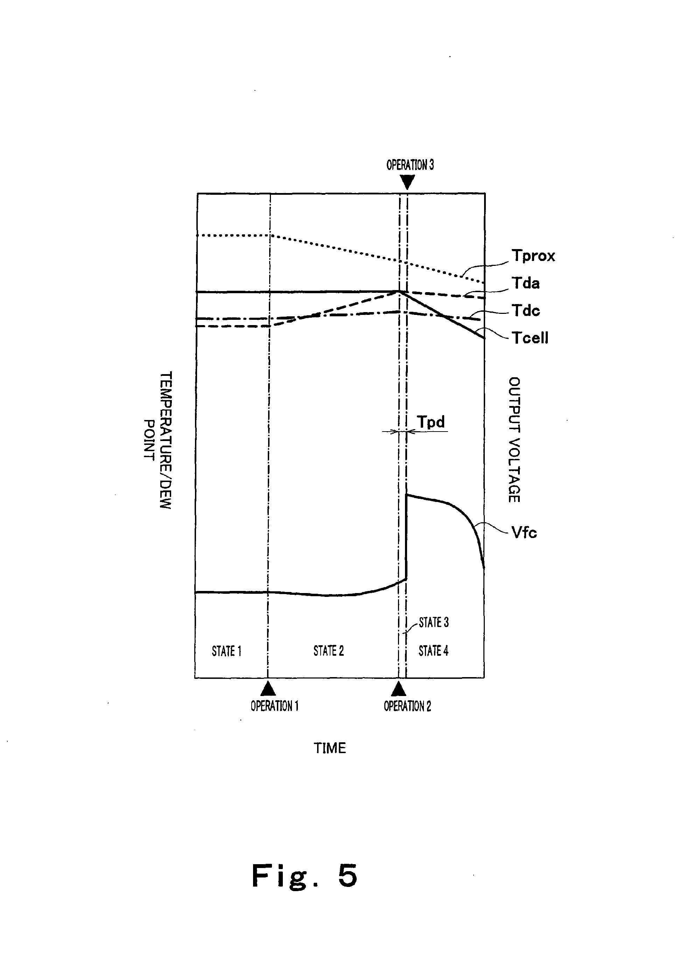

Besides, Fig. 5 is a time chart schematically representing how the fuel cell temperature Tcell, the fuel gas dew point Tda, the oxidizing gas dew point Tdc, the selective oxidation unit temperature Tprox and the fuel cell output voltage Vfc each vary with time in the first characteristic operation of the fuel cell system according to the first embodiment of the present invention. It should be noted that Fig. 5 selectively represents only operations necessary for describing the present invention, and the diagrammatic representation of the other remaining operations is omitted.

As shown in Figs. 4 and 5, in the present embodiment, in the fuel cell systems 100a and 100b, the fuel cell 11 is being operated in a low humidification operation mode that meets both the interrelations: Tcell > Tda and Tcell > Tdc.(State 1 of Fig. 5) When bringing the electric power generation operation of the fuel cell system 100a, 100b to a stop, the controller 20 controls the on-off valve 27 (water supply mechanism) shown in Figs. 2 and 3 to add water to the selective oxidation unit 25 (Step S1 of Fig. 4; Operation 1 of Fig. 5) to increase the fuel gas dew point Tda until the fuel gas dew point Tda conforms to the temperature Tce11 of the fuel cell 11 (Step 2 of Fig. 4; State 2 of Fig. 5). Here, in State 2 shown in Fig. 5, the controller 20 provides control that causes the fuel cell 11 to continue electric discharge, without cutting off the electric connection between the fuel cell 11 and the electric load. In addition, as shown in Fig. 5, in State 2, the oxidizing gas dew point Tdc and the fuel cell temperature Tcell remain almost unchanged, but the fuel gas dew point Tda increases with time and the temperature, Tprox, of the selective oxidation unit 25 decreases with time because the selective oxidation unit 25 is supplied with water. A more concrete description will be made with respect to a manner for compensating the drop in the temperature, Tprox, of the selective oxidation unit 25.

Next, based on output signals from the dew point sensor 21a and the temperature sensor 22, the controller 20 makes, while causing the fuel cell 11 to continue electric discharge, a decision of whether or not the fuel gas dew point Tda conforms to the temperature, Tcell, of the fuel cell 11 (Step S3).

More specifically, if the decision made in Step S3 indicates that the fuel gas dew point Tda does not conform to the temperature, Tcell, of the fuel cell 11 ("NO" in Step S3), the controller 20 continues providing control from Step S2 of Fig. 4 on until the time the fuel gas dew point Tda conforms to the temperature, Tcell, of the fuel cell 11, while the fuel cell 11 is left to continue electric discharge (State 2 of Fig. 5).

On the other hand, if the decision made in Step S3 indicates that the fuel gas dew point Tda conforms to the temperature, Tcell, of the fuel cell 11 ("YES" in Step S3), the controller 20 controls the on-off valve 27 (see Figs. 2 and 3) to stop the supply of water to the selective oxidation unit 25 while causing the fuel cell 11 to continue electric discharge (Step S4 of Fig. 4; Operation 2 of Fig. 5) whereby the increase in the fuel gas dew point Tda is stopped (Step S5).

Then the controller 20 causes the fuel cell system 100a, 100b to maintain its current operational state until the time the measured time Tm reaches a preset predetermined time Tpd (Step S6 of Fig. 4; State 3 of Fig. 5). In State 5 shown in Fig. 5, the polymer electrolyte membrane of the fuel cell 11 is well humidified to a state that makes the degradation of the polymer electrolyte membrane preventable by the use of moisture contained mainly in the fuel gas.

More specifically, in State 3 shown in Fig. 5, the controller 20 makes a decision of whether or not the measured time Tm reaches the preset predetermined time Tpd (Step S6).

If the decision made in Step S6 indicates that the measured time Tm does not yet reach the preset predetermined time Tpd ("NO" in Step S6), the controller 20 causes the fuel cell system 100a, 100b to further maintain its current operational state until the time the measured time Tm reaches the preset predetermined time Tpd, while the fuel cell 11 is left to continue electric discharge.

On the other hand, if the decision made in Step S6 indicates that the measured time Tm reaches the preset predetermined time Tpd ("YES" in Step S6), the controller 20 cuts off the electric connection between the fuel cell 11 and the electric load (Operation 3 of Fig. 5) to thereby cause the fuel cell 11 to stop electric discharge (Step S7). Then the controller 20 places the fuel cell 11 of the fuel cell system 100a, 100b in the open circuit state (State 4 of Fig. 5).

Thereafter, the controller 20 stops the fuel gas supplier 16 and the oxidizing gas supplier 17 from operating. Then the controller 20 stops all of the operations pertaining to the electric power generation operation of the fuel cell system 100a, 100b.

Furthermore, after cutting off the electric connection between the fuel cell 11 and the electric load in Step S7, the controller 20 causes the selective oxidation unit 25 to be filled up with fuel gas whereby the selective oxidation unit 25 becomes dried. This operation makes it possible to prevent the condensation of water in the selective oxidation unit 25 during the shutdown operation of the fuel cell system 100a, 100b. As a result of which, it becomes possible to suppress the degradation of the selective oxidation catalyst mounted in the selective oxidation unit 25. Besides, this operation will not increase the start energy of the selective oxidation unit 25 whereby it becomes possible to provide a fuel cell system of high efficiency.

Here, the above-described characteristic operation of the fuel cell system 100a, 100b is implemented by inputting predetermined programs to the memory of the controller 20.

In this way, in the present embodiment, when shutting down the electric power generation operation of the fuel cell 11 from a state in which the fuel cell 11 is being operated in a low humidification state that meets both the interrelations: Tcell > Tda and Tcell > Tdc, the controller 20 controls the fuel gas dew point Tda to increase by supplying water to the selective oxidation unit 25, controls the fuel cell 11 to continue electric discharge until the time the fuel gas dew point Tda conforms to the temperature, Tcell, of the fuel cell 11, and controls the fuel cell 11 to stop electric discharge to the electric load after the fuel gas dew point Tda conforms to the temperature, Tcell, of the fuel cell 11. This achieves the interrelation: Tcell ≤ Tda in the open circuit state in which the fuel cell 11 stops electric discharge to the electric load, and since the polymer electrolyte membrane is well humidified, this makes it possible that the durability of the fuel cell 11 is ensured satisfactorily.

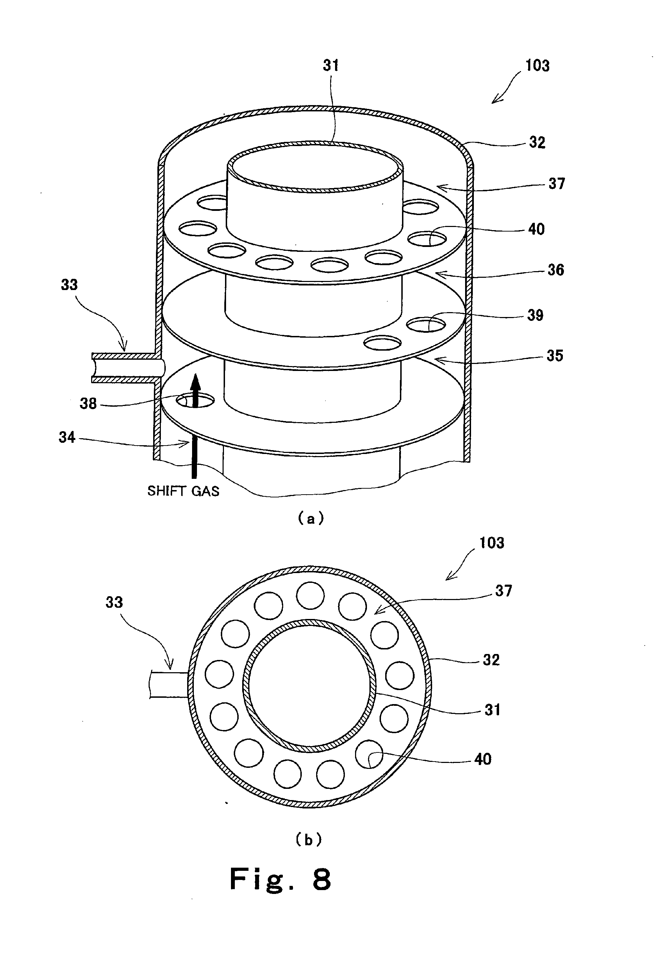

Here, with reference to Fig. 8, a description will be made of a concrete configuration of the selective oxidation unit 25 provided in the fuel cell system 100a, 100b according to the first embodiment of the present invention, and of the position for supplying water.

Fig. 8(a) is a perspective view schematically illustrating a concrete configuration of the selective oxidation unit provided in the fuel cell system according to the first embodiment of the present invention while on the other hand Fig. 8(b) is a top plan view schematically illustrating a concrete configuration of the selective oxidation unit shown in Fig. 8(a) as viewed from thereabove. In addition, for the sake of simplicity, Fig. 8(a) schematically illustrates a state that allows the internal portions of the selective oxidation unit to be visually seen by longitudinally cutting the external tube that composes the selective oxidation unit while on the other hand Fig. 8(b) schematically illustrates a state that allows internal portions of the selective oxidation unit to be visually seen by transversely cutting the external tube that composes the selective oxidation unit.

Referring now to Fig. 8(a) and (8b), there is shown a selective oxidation unit 103 according to the present embodiment. The selective oxidation unit 103 includes: an inner tube 31 constituting an inner wall and an outer tube 32 constituting an outer wall which tubes are disposed concentrically to one anther; a shift gas supply unit 34 which is supplied with fuel gas (shift gas) from a shift converter (not shown); an air supply unit 33 for supplying air to the supplied fuel gas; mixing sections 35 and 36 for mixing of air supplied from the air supply unit 33 and fuel gas supplied from the shift converter; and a selective oxidation catalytic unit 37 for reducing, by the use of a mixture gas of the fuel gas and the air discharged from the mixing section 36, the amount of carbon monoxide contained in the fuel gas by selective oxidation reaction. In addition, as shown in Figs. 8(a) and (8b), the selective oxidation unit 103 includes: an aperture 38 that allows fuel gas supplied to the shift gas supply unit 34 to travel to the mixing section 35; a plurality of apertures 39 that allow fuel gas mixed with air in the mixing section 35 to further travel to the mixing section 36; and a plurality of apertures 40, disposed in the shape of a ring, that allow fuel gas well mixed with air in the mixing section 36 to travel to the selective oxidation catalytic unit 37.

And in the present embodiment, the water supplied to the selective oxidation unit 103 is supplied directly to the selective oxidation catalytic unit 37 of the selective oxidation unit 103, or supplied to the air supply unit 33 together with air. Alternatively, in the present embodiment, the water supplied to the selective oxidation unit 103 is supplying directly to the mixing section 35 of the selective oxidation unit 103, or supplied directly to the mixing section 36 of the selective oxidation unit 103.

In this way, the water is supplied to the air supply unit 33, to the mixing section 35, to the mixing section 36, or to the selective oxidation unit 37 whereby the water thus supplied is efficiently and evenly mixed with fuel gas by the flow of air or by the flow of fuel gas. This makes it possible to provide the supply, to the fuel cell 11 of the fuel cell system 100a, 100b, of fuel gas which contains water vapor and whose dew point is properly controlled in an extremely simple configuration.

Next, a concrete description will be made with respect to a manner that compensates the drop in the temperature, Tprox, of the selective oxidation unit 25 when increasing the fuel gas dew point Tda with time.

The configuration of a fuel cell system pertaining to a manner that compensates the drop in the temperature Tprox and the hardware configuration of a fuel cell provided in the fuel cell system are the same as that of the fuel cell system 100a, 100b formed in accordance with the present embodiment (see Fig. 1, 2, and 3) and as that of the fuel cell provided in the fuel cell system 100a, 100b. Accordingly, a description of the configurations of the fuel cell system and the fuel cell provided in the fuel cell system is omitted.

And now, as has already been described above, the temperature, Tprox, of the selective oxidation unit 25 decreases with time because the water is supplied to the selective oxidation unit 25 when increasing the fuel gas dew point Tda. In this case, such decrease in the temperature, Tprox, of the selective oxidation unit 25 may cause the efficiency of selective oxidation that develops in the selective oxidation unit 25 to decrease.

Therefore, in the present embodiment, in order to suppress the drop with time in the temperature, Tprox, of the selective oxidation unit 25, the air is supplied to the selective oxidation unit 25 when increasing the fuel gas dew point Tda. As a result of employing such configuration, the drop in the efficiency of the selective oxidation reaction that develops in the selective oxidation unit 25 is suppressed.

Next, a description will be made in detail of a manner that compensates the drop in the temperature, Tprox, of the selective oxidation unit 25 when increasing the fuel gas dew point Tda with time.

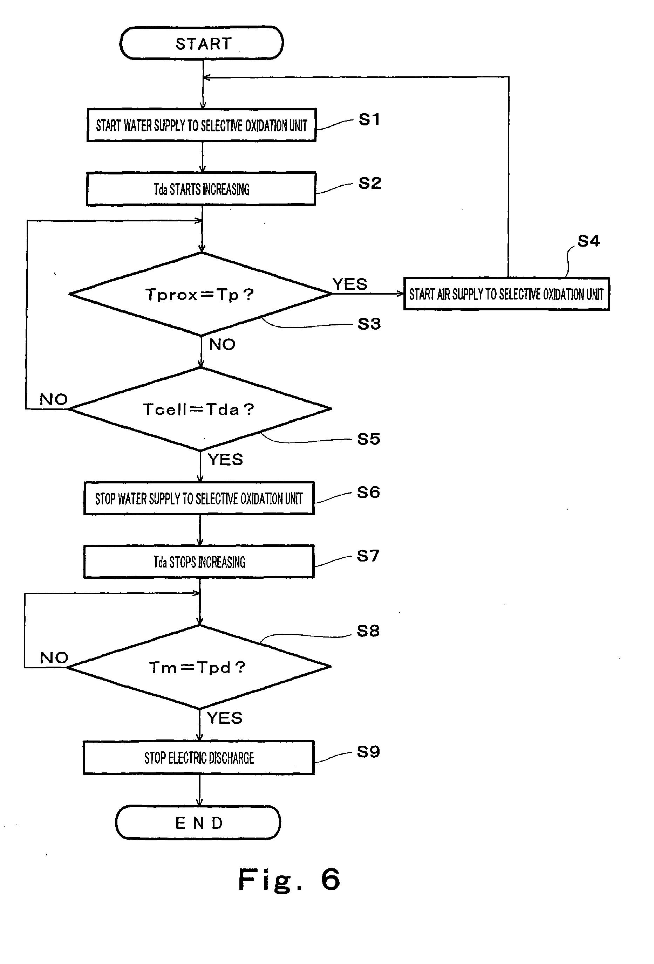

Fig. 6 is a flow chart schematically representing a second characteristic operation of the fuel cell system according to the first embodiment of the present invention. It should be noted that Fig. 6 selectively represents only steps necessary for describing the present invention, and the diagrammatic representation of the other remaining steps is omitted.

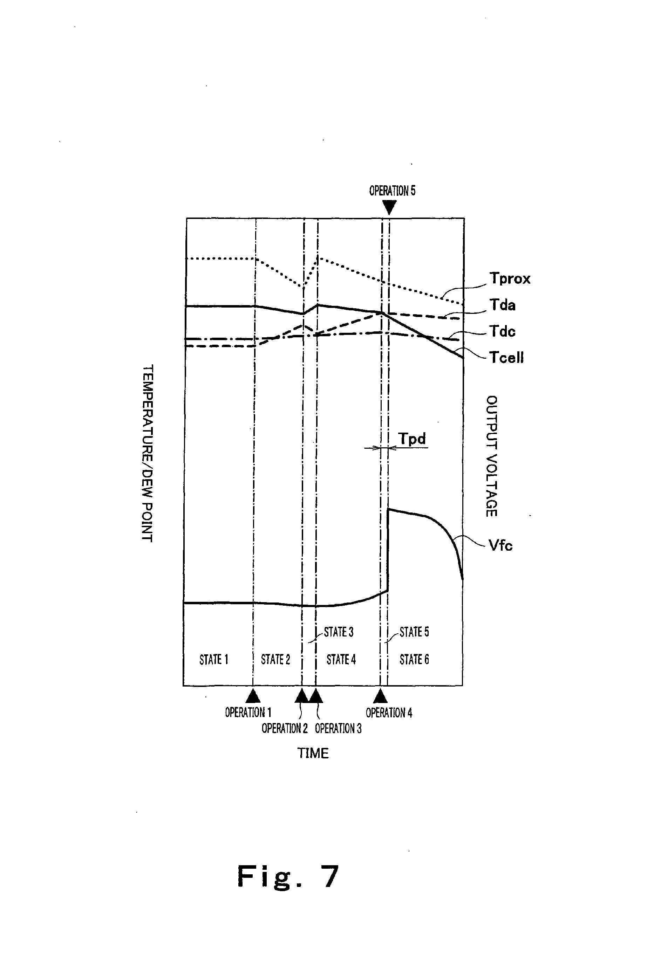

In addition, Fig. 7 is a time chart schematically representing how the fuel cell temperature Tcell, the fuel gas dew point Tda, the oxidizing gas dew point Tdc, the selective oxidation unit temperature Tprox, and the fuel cell output voltage Vfc each vary in the second characteristic operation of the fuel cell system according to the first embodiment of the present invention. It should be noted that Fig. 7 selectively represents only operations necessary for describing the present invention, and the diagrammatic representation of the other remaining operations is omitted.

As shown in Figs. 6 and 7, in the present embodiment, in the fuel cell systems 100a and 100b, the fuel cell 11 is being operated in a low humidification operation mode that meets both the interrelations: Tcell > Tda and Tcell > Tdc (State 1 of Fig. 7). When shutting down the electric power generation operation of the fuel cell system 100a, 100b, the controller 20 controls the on-off valve 27 (water supply mechanism) to add water to the selective oxidation unit 25 (step S1 of Fig. 6, operation 1 of Fig. 7) to increase the fuel gas dew point Tda until the fuel gas dew point Tda conforms to the temperature, Tcell of the fuel cell 11 (Step S2 of Fig. 6; State 2 of Fig. 7). Here, in State 2 shown in Fig. 7, the controller 20 provides control that causes the fuel cell 11 to continue electric discharge, without cutting off the electric connection between the fuel cell 11 and the electric load.

In this case, in State 2 as shown in Fig. 7, the oxidizing gas dew point Tdc and the fuel cell temperature Tcell remain almost unchanged, but the fuel gas dew point Tda increases with time while the temperature, Tprox, of the selective oxidation unit 25 decreases with time because the water is supplied to the selective oxidation unit 25.

Therefore, in the present embodiment, the fuel cell 11 is made to continue electric discharge without cutting off the electric connection between the fuel cell 11 and the electric load, while checking whether or not the temperature, Tprox, of the selective oxidation unit 25 is decreased down to a predetermined temperature threshold Tp or less by the supply of water. And, if it is decided that the temperature, Tprox, of the selective oxidation unit 25 decreases to conform to the predetermined temperature threshold Tp ("YES" in Step S3), the controller 20 controls the on-off valve 26 (an air supply mechanism) shown in Figs. 2 and 3 so that air is further added to the selective oxidation unit 25 (Step S4 of Fig. 6; Operation 2 of Fig. 7), whereby the temperature, Tprox, of the selective oxidation unit 25 is increased (State 3 of Fig. 7). In this State 3, in order that the temperature, Tprox, of the selective oxidation unit 25 is increased promptly, the controller 20 brings the supply of water to the selective oxidation unit 25 to a temporary stop. Then, once it is confirmed that the temperature, Tprox, of the selective oxidation unit 25 is increased, the controller 20 causes the supply of air to the selective oxidation unit 25 to stop while causing the supply of water to the selective oxidation unit 25 to resume (Step S1 of Fig. 6; Operation 3 of Fig. 7), whereby the fuel gas dew point Tda is again increased to conform to the temperature, Tcell, of the fuel cell 11 (Step S2 of Fig. 6; State 4 of Fig. 7).

Then if it is decided that the temperature, Tprox, of the selective oxidation unit 25 has not yet been decreased down to the predetermined temperature threshold Tp ("NO" in Step S3), the controller 20 further makes a decision, based on the output signals from the dew point sensor 21a and the temperature sensor 22, of whether or not the fuel gas dew point Tda conforms to the temperature, Tcell, of the fuel cell 11 while causing the fuel cell 11 to continue electric discharge (Step S5).

More specifically, if the decision made in this Step S5 indicates that the fuel gas dew point Tda does not conform to the temperature, Tcell, of the fuel cell 11 ("NO" in Step S5), the controller 20 continues providing control from Step S2 of Fig. 6 on (State 4 of Fig. 7) until the time the fuel gas dew point Tda conforms to the temperature, Tcell, of the fuel cell 11 while the fuel cell 11 is left to continue electric discharge.

On the other hand, if the decision made in Step S5 indicates that the fuel gas dew point Tda conforms to the temperature, Tcell, of the fuel cell 11 ("YES" in Step S5), the controller 20 controls the on-off valve 27 shown in Figs. 2 and 3 so that the supply of water to the selective oxidation unit 25 is brought to a stop (Step S6 of Fig. 6; Operation 4 of Fig. 7), while causing the fuel cell 11 to continue electric discharge, whereby the increase in the fuel gas dew point Tda is ceased (Step S7).

Then the controller 20 provides control so that the operational state of the fuel cell system 100a, 100b is maintained as it is until the time the measured time Tm reaches the preset predetermined time Tpd (Step S8 of Fig. 6; State 5 of Fig. 7). In State 7 shown in Fig. 7, the polymer electrolyte membrane of the fuel cell 11 is well humidified to a state that makes the degradation of the polymer electrolyte membrane preventable by the use of moisture contained mainly in the fuel gas.

More specifically, in State 5 shown in Fig. 7, the controller 20 makes a decision of whether or not the measured time Tm has reached the preset predetermined time Tpd (Step S8).

If the decision made in this Step S8 indicates that the measured time Tm has not yet reached the preset predetermined time Tpd ("NO" in Step S8), the controller 20 provides control that the operational state of the fuel cell system 100a, 100b is further maintained as it is until the time the measured time Tm reaches the preset predetermined time Tpd, while the fuel cell 11 is left to continue electric discharge.

On the other hand, if the decision made in Step S8 indicates that the measured time Tm has reached the preset predetermined time Tpd ("YES" in Step S8), the controller 20 cuts off the electric connection between the fuel cell 11 and the electric load (Operation 5 of Fig. 7) to cause the fuel cell 11 to stop electric discharge (Step S9). Then the controller 20 provides control that places the fuel cell 11 of the fuel cell system 100a, 100b in the open circuit state (State 6 of Fig. 7).

Thereafter, the controller 20 stops the fuel gas supplier 16 and the oxidizing gas supplier 17 from operating. Then the controller 20 brings all the operations relating to the electric power generation operation of the fuel cell system 100a, 100b to a stop. Besides, the controller 20, after cutting off the electric connection between the fuel cell 11 and the electric load in Step S9, causes the selective oxidation unit 25 to be filled up with fuel gas, whereby the selective oxidation unit 25 becomes dried.

In this way, in the present embodiment, when shutting down the electric power generation operation of the fuel cell 11 from a state in which the fuel cell 11 is being operated in a low humidification state that meets both the interrelations: Tcell > Tda and Tcell > Tdc, the controller 20 controls the fuel gas dew point Tda to increase by the supply of water to the selective oxidation unit 25 while suppressing the drop in the temperature, Tprox, of the selective oxidation unit 25.And the controller 20 controls the fuel cell 11 to continue to electric discharge until the time the fuel gas dew point Tda conforms to the temperature, Tcell, of the fuel cell 11, and controls the fuel cell 11 to stop electric discharge to the electric load after the fuel gas dew point Tda conforms to the temperature, Tcell, of the fuel cell 11. This achieves the interrelation Tcell ≤ Tda in the open circuit state in which the fuel cell 11 stops electric discharge to the electric load, and since the polymer electrolyte membrane is well humidified, this makes it possible that the durability of the fuel cell 11 is ensured satisfactorily.

Besides, in accordance with the present embodiment, the drop in the temperature, Tprox, of the selective oxidation unit 25 is suppressed in the process of increasing the fuel gas dew point Tda, thereby preventing the drop in the efficiency of lowering the carbon monoxide in the selective oxidation unit 25. This makes it possible to ensure the quality of fuel gas discharged from the selective oxidation unit 25.

Furthermore, in the present embodiment, the description has been made of a manner in which, prior to cutting off the electric connection between the fuel cell 11 and the load, the controller 20 provides, based on the fuel gas dew point or information relating thereto, control so that the water is supplied to the anode of the fuel cell 11 to thereby increase the fuel gas dew point, and thereafter the electric connection between the fuel cell 11 with the load is cut off However, such a manner should not be deemed limitative. That is, it may be possible to employ a manner in which, prior to cutting off the electric connection between the fuel cell 11 and the load, the controller 20 provides, based on the oxidizing gas dew point or information relating thereto, control so that the water is supplied to the cathode of the fuel cell 11 to thereby increase the oxidizing gas dew point, and thereafter the electric connection between the fuel cell 11 and the load is cut off. Alternatively, it may be possible to employ a manner in which, prior to cutting off the electric connection between the fuel cell 11 and the load, the controller 20 performs control, based on at least one of either the fuel gas dew point or information relating thereto and the oxidizing gas dew point or information relating thereto so that the water is supplied to at least one of the anode and the cathode of the fuel cell 11 to thereby increase at least one of the fuel gas dew point and the oxidizing gas dew point, and thereafter the electric connection between the fuel cell 11 and the load is cut off

In addition, the remaining other configurations and operations are the same as those of the fuel cell system 100a, 100b shown in Figs. 1-5.

With the configuration of the present embodiment, it becomes possible to properly supply water to the selective oxidation unit in the process of shutting down the electric power generation operation of the fuel cell system. Specifically explaining with reference to Fig. 2, in accordance with the configuration of the fuel cell system 100a of the present embodiment, it becomes possible to provide the supply, to the selective oxidation unit 25 of the fuel gas supplier 16, of water from the water tank 29 in the process of shutting down the electric power generation operation of the fuel cell system 100a by control of the operation of the water supply pump 28 by the controller 20. And, in this case, the controller 20 is able to properly control, based on either the dew point of fuel gas or the information relating to the fuel gas dew point, the operation of the water supply pump 28. Accordingly, with the configuration of the present embodiment, an adequate amount of water necessary for properly increasing the fuel gas dew point is supplied to the selective oxidation unit 25 of the fuel gas supplier 16 from the water tank 29. This accomplishes a proper increase in the fuel gas dew point and, as a result, the fuel gas properly humidified by using only just the necessary amount of water can be supplied to the polymer electrolyte fuel cell by a simple configuration. As a result, it becomes possible to relatively increase the content of water of the polymer electrolyte membrane, thereby making it possible to suppress the degradation of the polymer electrolyte membrane. This makes it possible to provide a fuel cell system having high durability.
Besides, with the configuration of the present embodiment, it is possible to effectively utilize heat unnecessary in the selective oxidation unit. Specifically explaining with reference to Fig. 2, the reaction of combustion removal of carbon monoxide that develops in the selective oxidation unit 25 of the fuel gas supplier 16 is an exothermic reaction which generates heat. And, in accordance with the configuration of the present embodiment, water supplied to the selective oxidation unit 25 from the water tank 29 can be heated such that its temperature approaches closely to the fuel gas temperature in the selective oxidation unit 25 by the use of heat excessively generated by exothermic reaction in the selective oxidation unit 25 (i.e., unnecessary heat). This efficiently humidifies fuel gas in the selective oxidation unit 25. In the light of reducing the standby time until the operation of the fuel cell system is brought to a stop, such efficient humidification of the fuel gas proves to be an extremely effective means. Accordingly, with the configuration of the present embodiment, it becomes possible to effectively use heat unnecessary in the selective oxidation unit 25.

### SECOND EMBODIMENT

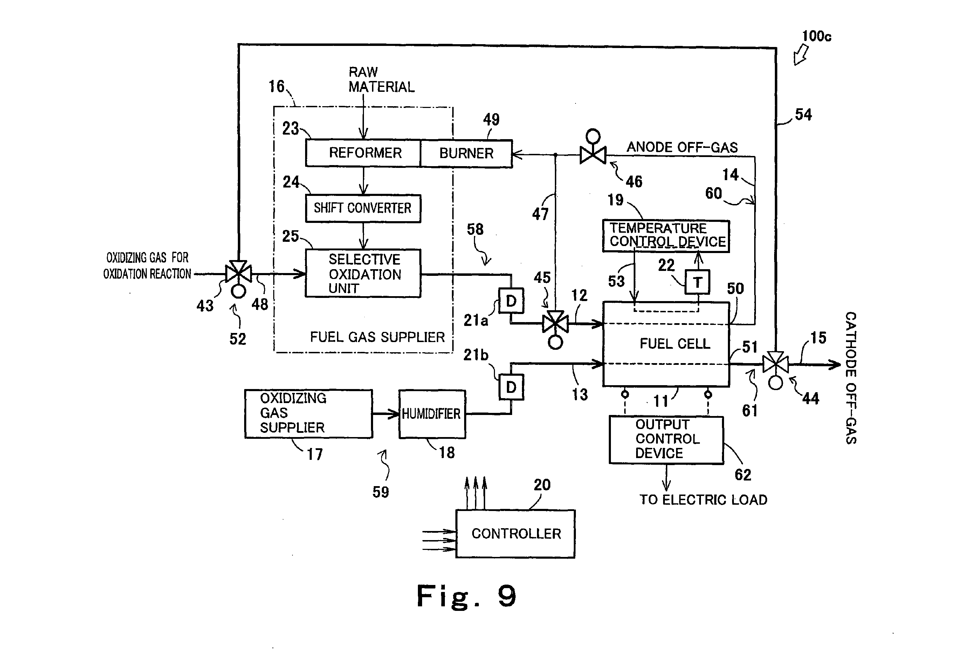

In the first place, a configuration of a fuel cell system according to a second embodiment of the present invention will be described with reference to Fig. 9.

Fig. 9 is a block diagram schematically illustrating a first configuration of the fuel cell system according to the first embodiment of the present invention. Besides, in the present embodiment, a fuel cell and a cell provided in the fuel cell system have exactly the same cross sectional structures as those of the fuel cell and the cell provided in the fuel cell system according to the first embodiment. In the following description, a description with regard to the cross sectional structures of the fuel cell and the cell provided in the fuel cell system is omitted accordingly.
As shown in Fig. 9, a fuel cell system 100c according to the present embodiment includes: a fuel cell 11 which generates electric power and heat when supplied with fuel gas and oxidizing gas; a fuel gas supply line 58 for supplying the fuel gas to the fuel cell 11; an oxidizing gas supply line 59 for supplying oxidizing gas to the fuel cell 11; a fuel gas discharge line 60 to which surplus fuel gas from the fuel cell 11 is discharged; an oxidizing gas discharge line 61 to which surplus oxidizing gas from the fuel cell 11 is discharged; a temperature control device 19 which regulates the temperature of the fuel cell 11; an output controller 62 which draws electric power from the fuel cell 11; and a controller 20 which suitably controls the operations of the fuel cell system 100c.

Here, a description will be made with regard to a configuration of the fuel gas supply line 58.

As shown in Fig. 9, the fuel gas supply line 58 includes, as in the case of the first embodiment, a fuel gas supplier 16 for producing fuel gas from raw material and oxidizing gas for oxidation reaction, and a dew point sensor 21 a for detecting the dew point of fuel gas supplied to the fuel cell 11 from the fuel gas supplier 16. And, during the electric power generation operation of the fuel cell system 100c, after its dew point is detected by the dew point sensor 21a, the fuel gas generated in the fuel gas supplier 16 is supplied to the fuel cell 11.

The fuel gas supplier 16 includes, as in the case of the first embodiment, a reformer 23, a shift converter 24 and a selective oxidation unit 25 and generates fuel gas rich in hydrogen from, for example, town gas, propane gas, or other like gas. In addition, sulphur components contained in the raw material are removed in a desulfurizer (not shown) and then is supplied to the reformer 23.

The reformer 23 employs, for example, a reforming method by steam-reforming reaction and includes a vessel whose inside is filled up with a catalyst of the nickel-based as a reform catalyst and a burner 49 as a heat source. And, in the reformer 23, hydrogen-rich fuel gas is generated, by steam-reforming reaction, from supplied raw material and high-temperature water vapor. The fuel gas generated in the reformer 23 is fed to the shift converter 24. In addition, the fuel gas generated in the reformer 23 is rich in hydrogen but contains much carbon monoxide that is harmful to the fuel cell 11.

The shift converter 24 includes, for example, a vessel filled with a catalyst of the copper-zinc-based or the like serving as a shift catalyst. In the shift converter 24, a predetermined shift reaction, in which carbon monoxide is oxidized to change to carbon dioxide, is expedited whereby the carbon monoxide in the fuel gas generated in the reformer 23 is reduced. Then, after its carbon monoxide has been reduced in the shift converter 24, the fuel gas is supplied to the selective oxidation unit 25.

The oxidation unit 25 includes, for example, a vessel filled up with a catalyst of the platinum-alumina-based or the like serving as a selective oxidation catalyst. In the oxidation unit 25, a predetermined selective oxidation reaction is made to advance by post-shift fuel gas fed from the shift converter 24 and oxidizing gas for selective oxidation (here air) drawn in from an oxidation-reaction oxidizing gas supply path 48, whereby the concentration of carbon monoxide present in the fuel gas is reduced. In this way, the fuel gas whose carbon monoxide has been reduced to a satisfactory level is supplied through the fuel gas supply path 12 to the fuel cell 11. In this way, the fuel gas generated in the fuel gas supplier 16 is humidified during the steam-reforming reaction and then is supplied, with much water vapour contained therein, to the fuel cell 11. The polymer electrolyte membrane 1 of the fuel cell 11 is maintained in a predetermined wet state by moisture contained in the fuel gas.

In addition, in the present embodiment, the fuel gas supplier 16 is provided with a selective gas supply unit 52 for selectively supplying oxidizing gas-containing cathode off-gas discharged from the fuel cell 11 or oxidizing gas for oxidation reaction. More specifically, the selective gas supply unit 52 is made up of an oxidation-reaction oxidizing gas supply path 48 for supplying oxidation-reaction oxidizing gas to the selective oxidation unit 25, a first three-way valve 43 disposed in the oxidation-reaction oxidizing gas supply path 48 and serving as an oxidizing gas supply path switch mechanism, and a cathode off-gas supply path 54 whose downstream end is connected to the first three-way valve 43. The first three-way valve 43 makes it possible to provide selective switching to one of three states, namely a first state that supplies oxidation-reaction oxidizing gas to the selective oxidation unit 25 of the fuel gas supplier 16, a second state that supplies cathode off-gas to the selective oxidation unit 25 of the fuel gas supplier 16, and a third state that supplies neither oxidation-reaction oxidizing gas nor the supply of cathode off-gas to the selective oxidation unit 25 of the fuel gas supplier 16.

In order to detect the dew point of fuel gas supplied to the fuel cell 11 from the fuel gas supplier 16, the dew point sensor 21a is disposed in the fuel gas supply path 12 through which the fuel gas generated in the fuel gas supplier 16 to the fuel cell 11 is supplied. As well as in the present embodiment, the dew point of fuel gas detected by the dew point sensor 21a is regarded as serving as the fuel gas dew point Tda in the inside of the fuel cell 11. In addition, as in the case of the first embodiment, any type of dew point sensor may be employed as the dew point sensor 21 a as long as it has durability against fuel gases and, in addition, temperature durability.

In addition, in the present embodiment, "Tda" indicates the temperature when the total amount of moisture contained in the fuel gas is expressed in terms of the dew point temperature. Here, what is meant by "the total content of moisture contained in the fuel gas" is the combined moisture content total that is the sum of the content of water vapor and the content of water in the fuel gas. For example, even if a part of the moisture contained in the fuel gas forms dew to thereby cause the fuel gas to contain water vapor and water, the temperature, found by expressing, in terms of the dew point temperature, the combined moisture content total (i.e., the sum of the content of water vapor and the content of water in the fuel gas), serves as Tda on the basis of the above-mentioned definition.

Next, a description will be made with regard to a configuration of the oxidizing gas supply line 59.

As shown in Fig. 9, the oxidizing gas supply line 59 is provided with an oxidizing gas supplier 17, a humidifier 18, and a dew point sensor 21c for detecting the dew point of oxidizing gas which is supplied to the fuel cell 11. Oxidizing gas from the oxidizing gas supplier 17 is humidified in the humidifier 18 and, after its dew point is detected by the dew point sensor 21c, is supplied to the fuel cell 11.

The oxidizing gas supplier 17 is, for example, a sirocco fan, as in the case of the first embodiment. The oxidizing gas supplier 17 draws in oxidizing gas (here, air) from the atmosphere and supplies the drawn-in oxidizing gas to the humidifier 18. Then, the humidifier 18 humidifies the oxidizing gas supplied from the oxidizing gas supplier 17 and thereafter delivers the humidified oxidizing gas to the fuel cell 11.

In order to detect the dew point of oxidizing gas supplied through the humidifier 18 to the fuel cell 11 from the oxidizing gas supplier 17, the dew point sensor 21c is disposed in the oxidizing gas supply path 13 for supplying oxidizing gas to the fuel cell 11 from the humidifier 18. As well as in the present embodiment, the dew point of oxidizing gas detected by the dew point sensor 21c is regarded as serving as the oxidizing gas dew point Tdc in the inside of the fuel cell 11. In addition, any type of dew point sensor may be employed as the dew point sensor 21c as long as it has durability against oxidizing gases and, in addition, temperature durability.

In addition, in the present embodiment, "Tdc" indicates the temperature when the total amount of moisture contained in the oxidizing gas is expressed in terms of the dew point temperature. Here, what is meant by "the total content of moisture contained in the oxidizing gas" is the combined moisture content total that is the sum of the content of water vapor and the content of water in the oxidizing gas. For example, even if a part of the moisture contained in the oxidizing gas forms dew to thereby cause the oxidizing gas to contain both water vapor and water, the temperature, found by expressing, in terms of the dew point temperature, the moisture content total (the sum of the content of water vapor and the content of water in the oxidizing gas), serves as Tdc on the basis of the above-mentioned definition.

Next, a description will be made with regard to a configuration of the fuel gas discharge line 60.

The fuel gas discharge line 60 is provided with an anode off-gas discharge path 14 which connects together a fuel gas outlet port 50 of the fuel cell 11 and a fuel gas supply port of the burner 49. Of the fuel gas supplied to the fuel cell 11, unused fuel gas (surplus fuel gas) is discharged to the anode off-gas discharge path 14. Here, the gas that contains fuel gas discharged to the anode off-gas discharge path 14 from the fuel cell 11 will be called the "anode off-gas". The anode off-gas discharge path 14 includes a heat exchanger (not shown) and a condenser (not shown) wherein fuel gas and water vapor contained in the anode off-gas are cooled in the heat exchanger and moisture is removed in the condenser. In this way, the fuel gas present in the anode off-gas is supplied to the burner 49 and is utilized there as a combustion fuel.
In addition, as shown in Fig. 9, connected to the anode off-gas discharge path 14 is the downstream end of a bypass path 47 through which fuel gas is fed, bypassing the fuel cell 11, to the burner 49 from the fuel gas supply path 12. Disposed upstream of where the anode off-gas discharge path 14 and the bypass path 47 are connected is an on-off valve 46 which opens and closes the anode off-gas discharge path 14. Besides, a third three-way valve 45 is disposed at where the upstream end of the bypass path 47 and the fuel gas supply path 12 are connected together. The third three-way valve 45 makes it possible to provide selective switching to one of states, a namely a first state that allows the supply of fuel gas generated in the fuel gas supplier 16 to the fuel cell 11 and another state that allows the supply of fuel gas to the burner 49 in which supply the fuel cell 11 is bypassed.
Next, a description will be made with regard to a configuration of the oxidizing gas discharge line 61.

The oxidizing gas discharge line 61 is provided with a cathode off-gas discharge path 15 the upstream end of which is connected to an oxidizing gas outlet port 51 of the fuel cell 11. Surplus oxidizing gas remaining unused and water generated in the fuel cell 11are discharged to the cathode off-gas discharge path 15. Here, the gas with a content of oxidizing gas discharged to the cathode off-gas discharge path 15 is called the "cathode off-gas". The cathode off-gas contains high-temperature oxygen, nitrogen and water vapor. The cathode off-gas discharge path 15 is provided with a second three-way valve 44 serving as a cathode off-gas discharge path switch mechanism and, by the second three-way valve 44, the cathode off-gas discharge path 15 is branched off into a discharge path and a supply path to the selective oxidation unit 25 of the fuel gas supplier 16. As a supply path to the selective oxidation unit 25 of the fuel gas supplier 16, a cathode off-gas supply path 54 is provided whose upstream end is connected to the second three-way valve 44. The downstream end of the cathode off-gas supply path 54 is connected to the first three-way valve 43 which is disposed in the oxidation-reaction oxidizing gas supply path 48 through which to deliver oxidation-reaction oxidizing gas to the selective oxidation unit 25 of the fuel gas supplier 16 and which serves as an oxidizing gas supply path switch mechanism. In this way, the fuel cell system 100c according to the present embodiment is configured so that a part or all of the cathode off-gas discharged from the fuel cell 11 can be supplied through the cathode off-gas supply path 54 to the selective oxidation unit 25 of the fuel gas supplier 16. In addition, the downstream end of the cathode off-gas discharge path 15 is opened to the atmosphere.

Next, a description will be made with regard to a configuration of the temperature control device 19.

The temperature control device 19 includes, as in the case of the first embodiment, a circulation path 53 and a circulation pump (not shown) for circulating cooling medium between the temperature control device 19 and the fuel cell 11, and a heat radiator such as a cooling fin, a heat exchanger et cetera for causing cooling medium circulating in the circulation path 53 to release heat therefrom. In the temperature control device 19, cooling medium circulating in the circulation path 53 is supplied to the fuel cell 11, is discharged from the fuel cell 11 after having been heated to higher temperature by heat generated associated with the generation of electric power, is cooled to lower temperature in the heat radiator, and thereafter is again supplied to the fuel cell 11. In addition, heat energy recovered from the fuel cell 11 by cooling medium is used for supplying hot water or other like application.

Besides, the temperature control device 19 is configured such that the temperature of the fuel cell 11 is maintained at a constant level by making a change in at least either one of the flow rate and the amount of heat radiation of the cooling medium. For the temperature control of the fuel cell 11, the temperature control device 19 is provided with a temperature sensor 22 for detecting the temperature of cooling medium. In the present embodiment, the temperature sensor 22 is disposed so as to be able to detect the temperature of cooling medium discharged to the temperature control device 19 from the fuel cell 11. As a method for detecting the temperature of the fuel cell 11, it is conceivable to employ a method which measures the temperature of cooling medium supplied to the fuel cell 11, a method which directly measures the temperature of separators 7a and 7c which compose the fuel cell 11 by means of a thermocouple, a method which measures the temperature of cooling medium discharged from the fuel cell 7, or other like method.

Also in the present embodiment, the temperature of cooling medium detected by the temperature sensor 22 is regarded as serving as the "temperature, Tcell, of the fuel cell 11". In addition, the temperature, Tcell, of the fuel cell 11 is the highest of the temperatures of the fuel cell 11. On the other hand, the portion that has the highest of the temperatures of the fuel cell 11 is supposed to be an outlet port portion from which cooling medium supplied from the inlet port exits. Therefore, in the present embodiment, it is configured such that the temperature of cooling medium discharged to the temperature control device 19 from the fuel cell 11 is detected using the temperature sensor 22.

Next, a description will be made with regard to a configuration of the output controller 62.
The input and the output terminals of the output controller 62 are connected to the output terminal of the fuel cell 11 and to the electric load, respectively. Here, the output controller 62 is provided with an inverter so that a direct current generated in the fuel cell 11 is converted into an alternating current which is then output to the load. Besides, the output controller 62 controls an electric current (output) drawn out from the fuel cell 11 to thereby control the electric power generation amount of the fuel cell 11. The output controller 62 establishes the electric connection/disconnection between the fuel cell 11 and the electric load.
Last of all, a description will be made with regard to a configuration of the controller 20.

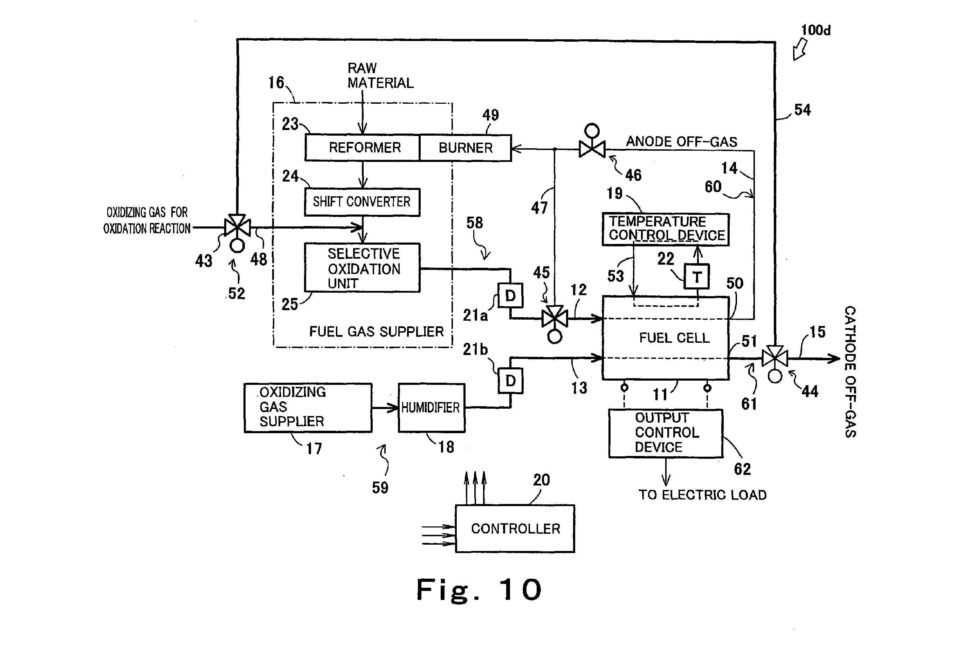

As in the case of the first embodiment, the controller 20 according to the present embodiment includes, for example, an MPU and a memory and, based on data such as programs, parameters, or the like prestored in the memory, suitably controls the operation of each of elements constituting the fuel cell system 100. In the present embodiment, the controller 20 suitably controls the operations of at least the fuel cell 11, the fuel gas supplier 16, the oxidizing gas supplier 17 and the temperature control device 19 and, in addition, suitably controls the operations of the first three-way valve 43, the second three-way valve 44, and the output controller 62.
Next, referring to Fig. 10, a modification of the fuel cell system according to the second embodiment of the present invention will be described below.

Fig. 10 is a block diagram schematically illustrating a second configuration of the fuel cell system according to the second embodiment of the present invention.

As shown in Fig. 10, there is shown a fuel cell system 100d according to the second embodiment of the present invention which system has basically the same configuration as the configuration of the fuel cell system 100a shown in Fig. 9. That is, the fuel cell system 100d includes a fuel gas supplier 16, an oxidizing gas supplier 17, a humidifier 18, a dew point sensor 21a, a dew point sensor 21c, a fuel cell 11, a temperature control device 19, an output controller 62 and a controller 20. And, the fuel cell system 100d, too, is configured such that fuel gas is supplied to the fuel cell 11 from the fuel gas supplier 16 through the dew point sensor 21a while oxidizing gas is supplied to the fuel cell 11from the oxidizing gas supplier 17 through the humidifier 18 and then through the dew point sensor 21c. Besides, the fuel cell system 100d, too, is configured such that the temperature of the fuel cell 11 is controlled by the temperature control device 19 while the operations of the fuel cell system 100d is suitably controlled by the controller 20.

On the other hand, contrary to the configuration of the fuel cell system 100c that the oxidation-reaction oxidizing gas and so on are supplied through the oxidation-reaction oxidizing gas supply path 48 to the selective oxidation unit 25 of the fuel gas supplier 16, the fuel cell system 100d of the present embodiment (Fig. 10) is configured such that the oxidation-reaction oxidizing gas and so on are supplied through the oxidation-reaction oxidizing gas supply path 48 to the connecting piping of the shift converter 24 and the selective oxidation unit 25, as shown in Fig. 10. In addition, the rest is the same as the fuel cell system 100c shown in Fig. 9.

Next, a description will be made in detail with respect to a characteristic operation of the fuel cell system according to the second embodiment of the present invention. In addition, the hereinafter described characteristic operation of the fuel cell system 100c, 100d is carried out by the execution of a predetermined program prestored in the memory of the controller 20 in the MPU.
The fuel cell system 100c, 100d according to the present embodiment has four different operational modes, i.e., a "shutdown state (standby state)" in which all the constituent elements concerned with the generation of electric power are shut down; an "electric power generation operation" in which electric power is generated; a "start-up operation" in which the fuel cell system 100c, 100d is activated, in a smooth manner, to the "electric power generation operation" from the "shutdown state"; and a "shutdown operation" in which the fuel cell system 100c, 100d is shut down, in a smooth manner, to the "shutdown state" from the "electric power generation operation".
In the present embodiment, the constituent elements other than the controller 20 are shut down in the "shutdown state". In the present invention, the time that the "start-up operation" starts is the output time of a "start-up signal" in the fuel cell system 100c, 100d. The time that the "shutdown operation" starts is the output time of a "shutdown signal" in the fuel cell system 100c, 100d. The time that the "generation operation" starts is the time that the fuel cell 11 starts generating electric power. Accordingly, the "start-up operation time" means the period of time from when the "start-up signal" is output in the fuel cell system 100c, 100d to when the fuel cell 11 starts generating electric power. The "electric power generation operation time" means the period of time from when the fuel cell 11 starts generating electric power to when the "shutdown signal" is output in the fuel cell system 100c, 100d. The "shutdown operation time" means the period of time from when the "shutdown signal" is output in the fuel cell system 100c, 100d to when all of the constituent elements concerned with the generation of electric power are shut down. Besides, the time that the fuel cell 11 is electrically connected to the electric load to enter the closed circuit state is called the "electric power generating time" while on the other hand the time that the fuel cell 11 is electrically cut off from the electric load to enter the open circuit state is the "non electric power generating time".
In the present embodiment, during the electric power generation operation, the fuel cell 11 generates electric power in an adequate low humidification state in the fuel cell system 100c, 100d. This includes a case in which al least a part of the inside of the fuel cell 11 is in a low humidification state. In addition, here, the "low humidification state" is, for example, an operational condition in which: (the cooling-medium inlet port portion's temperature in the fuel cell 11 ≤ Tda < (the cooling-medium outlet port portion's temperature in the fuel cell 11, i.e., Tcell) and, in addition, (the cooling-medium inlet port portion's temperature in the fuel cell 11 ≤ Tdc < (the cooling-medium outlet port portion's temperature in the fuel cell 11, i.e., Tcell).

However, the low humidification state may be any operational condition that meets at least both the interrelations: Tcell > Tda and Tcell > Tdc. Accordingly, the low humidification state may include, for example, an operational condition in which: Tda < (the cooling-medium inlet port portion's temperature in the fuel cell 11) and, in addition, Tdc < (the cooling-medium inlet port portion's temperature in the fuel cell 11). In this case, almost the entire area of the inside of the fuel cell 11 is in the low humidification condition. Besides, the low humidification condition may include, for example, an operational condition in which: (the cooling-medium inlet port portion's temperature in the fuel cell 11) ≤ Tda < (the cooling-medium outlet port portion's temperature in the fuel cell 11, i.e., Tcell) and, in addition, Tdc < (the cooling-medium inlet port portion's temperature in the fuel cell 11). Alternatively, the low humidification state may include, for example, an operational condition in which: Tda < (the cooling-medium inlet port portion's temperature in the fuel cell 11 ≤ Tdc < (the cooling-medium outlet port portion's temperature in the fuel cell 11, i.e., Tcell).

The operation of the fuel cell system 100c, 100d according to the present embodiment is the same as the operation of the conventional fuel cell system with the exception that, when the shutdown operation of the fuel cell system 100c, 100d starts, the cathode off-gas is supplied to the selective oxidation unit 25 of the fuel gas supplier 16 prior to cutting off the electric connection between the fuel cell 11 which is generating electric power in the low humidification state, and the electric load (that is, before the fuel cell 11 enters the open circuit state).Therefore, hereinafter, only characteristic operations of the fuel cell system 100c, 100d according to the present embodiment will selectively described in detail.

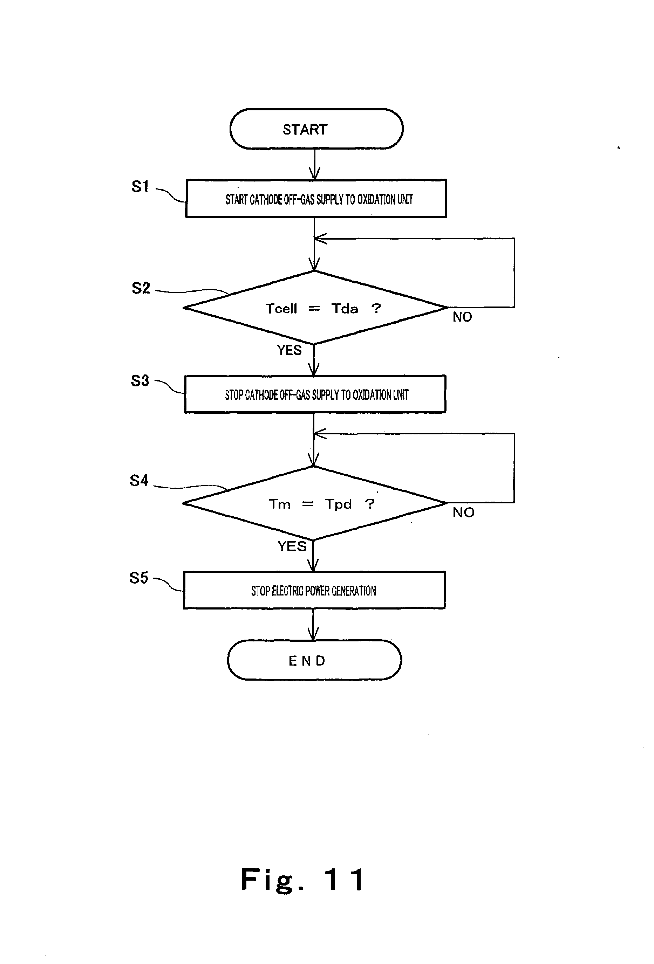

Fig. 11 is a flow chart schematically representing a characteristic operation of the fuel cell system according to the second embodiment of the present invention. It should be noted that Fig. 11 selectively represents only steps necessary for describing the present invention, and the diagrammatic representation of the other remaining steps is omitted.

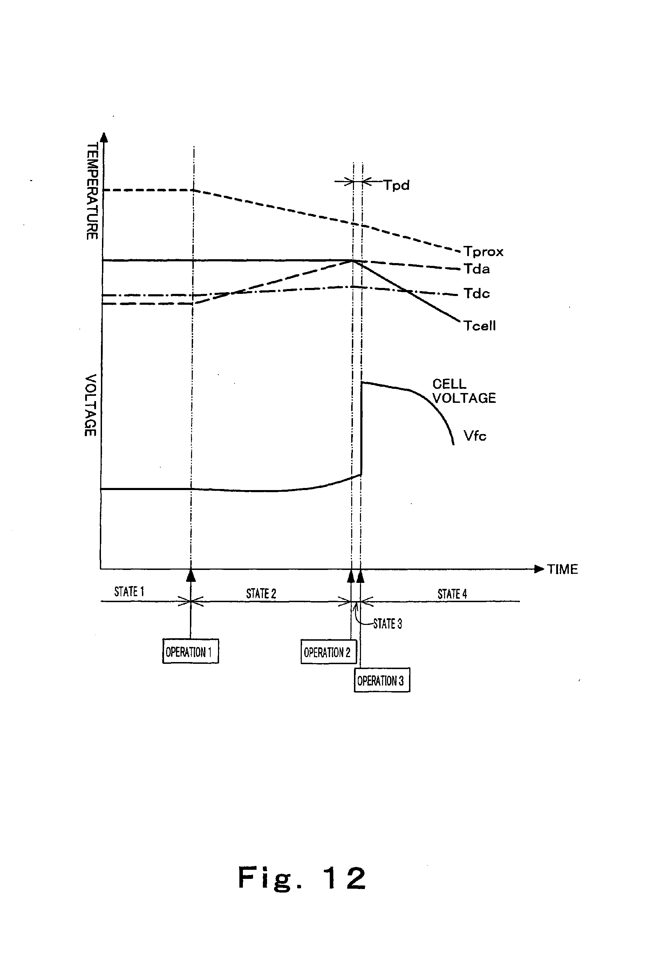

Additionally, Fig. 12 is a time chart schematically representing how the fuel cell temperature Tcell, the fuel gas dew point Tda, the oxidizing gas dew point Tdc, the selective oxidation unit temperature Tprox and the fuel cell output voltage Vfc each vary in the characteristic operation of the fuel cell system according to the second embodiment of the present invention. It should be noted that Fig. 12 selectively represents only operations necessary for describing the present invention, and the diagrammatic representation of the other remaining operations is omitted.

As shown in Figs. 11 and 12, during the electric power generation operation, the fuel cell 11 of the fuel cell system 100c, 100d generates electric power in the low humidification state (State 1). In State 1 shown in Fig. 12, when the shutdown operation starts in the fuel cell system 100c, 100d, the controller 20 first causes the second three-way valve 44 to operate so that the cathode off-gas is supplied to the selective oxidation unit 25 of the fuel gas supplier 16, while maintaining the electric connection between the fuel cell 11 and the eclectic load, in other words, while the generation of electric power is maintained (Step S1; Operation 1 of Fig. 12). As a result of this, the selective oxidation unit 25 of the fuel gas supplier 16 is supplied with cathode off-gas containing much moisture, whereby the fuel gas dew point Tda increases (State 2). In addition, the cathode off-gas contains water, in the form of water vapor, generated by the reaction of fuel gas and oxidizing gas in the fuel cell 11.
In State 2 shown in Fig. 12, although both the oxidizing gas dew point Tdc and the temperature, Tcell, of the fuel cell 11 remain almost unchanged because the electric power generation of the fuel cell 11 is maintained, the fuel gas dew point Tda increases with time while the temperature, Tprox, of the selective oxidation unit 25 decreases with time because the cathode off-gas containing much moisture is supplied to the selective oxidation unit 25 of the fuel gas supplier 16.

In addition, the rate of flow of the cathode off-gas supplied to the selective oxidation unit 25 of the fuel gas supplier 16 is suitably regulated. For example, it is possible to control the rate of flow of the cathode off-gas supplied to the selective oxidation unit 25 of the fuel gas supplier 16 by regulating the flow ratio of cathode off-gas between in the supply path and in the discharge path in the second three-way valve 44. In this case, preferably a force feed means, such as a pump or the like, is provided so that cathode off-gas is force-fed to the cathode off-gas supply path 54. Alternatively, the rate of flow of the cathode off-gas supplied to the selective oxidation unit 25 of the fuel gas supplier 16 can be controlled by operating the second three-way valve 44 so that all cathode off-gas flows into the cathode off-gas supply path 54 and, in addition, by regulating the rate of flow of the oxidizing gas supplied to the fuel cell 11 by the oxidizing gas supplier 17.

Next, the controller 20 makes a decision of whether or not the temperature, Tcell, of the fuel cell 11 conforms to the fuel gas dew point Tda, while causing the fuel cell 11 to continue generating electric power (Step S2). Here, based on the values detected by the dew point sensor 21a and by the temperature sensor 22, the controller 20 makes a decision on the magnitude relation between the fuel gas dew point Tda and the temperature, Tcell, of the fuel cell 11.

The fuel gas dew point Tda increases, and when the fuel gas dew point Tda and the temperature, Tcell, of the fuel cell 11 finally conform to each other ( "YES" in Step S2), the controller 20 causes the second three-way valve 44 to operate so that the supply of cathode off-gas to the selective oxidation unit 25 of the fuel gas supplier 16 is brought to a stop, while the electric connection between the fuel cell 11 and the electric load is maintained (Step S3; Operation 2 of Fig. 12). This stops the increase in the fuel gas dew point Tda.

Here when the temperature, Tcell, of the fuel cell 11 and the fuel gas dew point Tda conform to one another, the controller 20 stops the supply of cathode off-gas to the selective oxidation unit 25 of the fuel gas supplier 16. However, the advantageous effects of the present invention can be obtained if the condition for stopping the supply of cathode off-gas to the selective oxidation unit 25 of the fuel gas supplier 16 is: Tda (the fuel gas dew point) ≥ Tcell (the temperature of the fuel cell 11).

Then the controller 20 controls the second three-way valve 44 to operate so that the supply of cathode off-gas to the selective oxidation unit 25 is stopped, subsequently starts a time measurement, and makes a decision of whether or not the measured time Tm reaches a preset predetermined time Tpd (Step S4). Here if the decision made in this Step S4 indicates that the measured time Tm does not reach the preset predetermined time Tpd ("NO" in Step S4), the controller 20 provides control that the state of the fuel cell system 100 is maintained until the time the measured time Tm reaches the preset predetermined time Tpd, while the electric power generation of the fuel cell 11 is continued (Step 3). In Step S3 shown in Fig. 12, the electric power generation of the fuel cell 11 is continued, and the polymer electrolyte membrane 1 of the fuel cell 11 is well humidified, by moisture contained in the fuel and oxidizing gases, up to a state capable of preventing the polymer electrolyte membrane from degradation.

Eventually, if the measured time Tm reaches the preset predetermined time Tpd ("YES in Step S4), the controller 20 provides control that cuts off the electric connection between the fuel cell 11 and the electric load (Step S5; Operation 3 of Fig. 12). As a result of this, the generation of electric power of the fuel cell 11 ceases, and the fuel cell 11 makes a change in its state to the open circuit state from the closed circuit state (State 4).

In State 4 shown in Fig. 12, although the output voltage, Vfc, of the fuel cell 11 is increased by the state change to the open circuit state, the wet state of the polymer electrolyte membrane 1 of the fuel cell 11 is higher than the wet state of the polymer electrolyte membrane 1 during the electric power generation operation in the low humidification state. The reason for this is explained as follows. That is, the interrelation: Tcell (the fuel cell temperature) ≤ Tda (the fuel gas dew point) holds because the fuel gas dew point is increased by moisture contained in the cathode off-gas and, therefore, the polymer electrolyte membrane 1 is well humidified by moisture contained in the fuel gas. In this way, in the fuel cell 11, during the non electric power generation, the polymer electrolyte membrane 1 is well humidified, thereby reducing the swelling/contraction of the polymer electrolyte membrane 1. As a result of this, it becomes possible to prevent the polymer electrolyte membrane 1 from damage (such as break or the like) associated with the increase in the stop frequency of the electric power generation of the polymer electrolyte fuel cell 1, whereby the degradation thereof is suppressed.

Thereafter, the controller 20 controls and causes the fuel gas supplier 16 and the oxidizing gas supplier 17 to stop operating. Here, it is desirable that the selective oxidation unit 25 of the fuel gas supplier 16 is filled up with raw material before the operation of the fuel gas supplier 16 is stopped and when the fuel cell 11 is in the open circuit state. More specifically, after cutting off the electric connection between the fuel cell 11 and the electric load in Step S5, the controller 20 controls the first three-way valve 43 to operate so that the supply of oxidizing gas and cathode off-gas is stopped, while maintaining the supply of raw material. Furthermore, the third three-way valve 45 is switched to the bypass path 47 and the on-off valve 46 is closed, thereby establishing a state in which the fuel gas present in the inside of the selective oxidation unit 25 is supplied to the burner 49 without passage through the fuel cell 11. By the filling up of the selective oxidation unit 25 of the fuel gas supplier 16 with raw material in the way as described above, the selective oxidation unit 25 becomes dried, thereby making it possible to prevent water from condensing in the selective oxidation unit 25 during the shutdown of the fuel cell system 100c, 100d. This makes it possible to suppress the degradation of the selective oxidation catalyst mounted in the selective oxidation unit 25 of the fuel gas supplier 16. Furthermore, since there is no increase in the starting energy of the selective oxidation unit 25 of the fuel gas supplier 16, this contributes to increasing the efficiency of the fuel cell system 100c, 100d to higher level.

Finally, the controller 20 controls and causes all the constituent elements concerned with the electric power generation of the fuel cell system 100c, 100d to stop operating and then places the fuel cell system 100c, 100d in the shutdown state.

As described above, in the present embodiment, the moisture-containing cathode off-gas is supplied to the selective oxidation unit 25 of the fuel gas supplier 16 when stopping the electric power generation of the fuel cell 11 from the state in which it is generating electric power in the low humidification state, whereby Tda, the dew point of fuel gas supplied to the fuel cell 11, increases. The electric power generation of the fuel cell 11 is continued in this state and is stoped after the fuel gas dew point Tda increases to conform to the temperature, Tcell, of the fuel cell 11. As a result of this, the interrelation: Tcell (the temperature of the fuel cell 11) ≤ Tda (the fuel gas dew point) holds in the fuel cell 11 during the non electric power generation. Now, therefore, during the non electric power generation of the fuel cell 11, the polymer electrolyte membrane 1 is well humidified, whereby the degradation of the polymer electrolyte membrane 1 is suppressed to thereby enhance the durability of the fuel cell 11.

In addition, in the present embodiment, the description has been made with respect to an embodiment in which the dew point sensor 21a and the dew point sensor 21c are used to detect the fuel gas dew point Tda and the oxidizing gas dew point Tdc. However, such an embodiment should not be deemed limitative. For example, as in the first embodiment, from the fact that the fuel gas dew point Tda is dependent on the performance of the fuel gas supplier 16 while the oxidizing gas dew point Tdc is dependent on the performance of the humidifier 18, it may be possible to employ a manner in which the fuel gas dew point Tda is a dew point calculated based on the operational condition of the fuel gas supplier 16 (for example, a parameter such as the rate of flow of raw material, the amount of reforming water, the reforming temperature et cetera) while the oxidizing gas dew point Tdc is either a dew point calculated based on the operational condition of the humidifier 18 or the temperature of the humidifier 18. In this case, based on the value detected by the temperature sensor 22 and on the elapsed time since the start of the supply of cathode off-gas to the selective oxidation unit 25, the controller 20 makes a decision on the magnitude relation between the fuel gas dew point Tda and the temperature, Tcell, of the fuel cell 11.

Besides, in the present embodiment, the description has been made of an embodiment in which the electric connection between the fuel cell 11 and the electric load is cut off after the measured time Tm reaches the preset predetermined time Tpd. However, such a manner should not be deemed limitative. For example, it may be possible to employ a manner in which the electric connection between the fuel cell 11 and the electric load is cut off upon the conformity of the temperature, Tcell, of the fuel cell 11 with the fuel gas dew point Tda. Even in such a manner, the same advantageous effects as accomplished by the present embodiment can be accomplished.

Besides, in the present embodiment, the description has been made with respect to an embodiment in which the electric power generation of the fuel cell 11 is brought to a stop after Tda (the dew point of fuel gas supplied to the fuel cell 11) increases to conform to Tcell (the temperature of the fuel cell 11). However, such a manner should not be deemed limitative. For example, it may be possible to employ a manner in which the electric power generation of the fuel cell 11 is brought to a stop after Tda (the dew point of fuel gas which is supplied to the fuel cell 11) increases to exceed the temperature, Tcell, of the fuel cell 11. As a result of this, the interrelation: the temperature, Tcell, of the fuel cell 11) < (the fuel gas dew point Tda) holds in the fuel cell 11 during the non electric power generation of the fuel cell 11. As a result of this, during the non electric power generation of the fuel cell 11, the polymer electrolyte membrane 1 is well humidified, whereby the degradation of the polymer electrolyte membrane 1 is ensuredly suppressed.

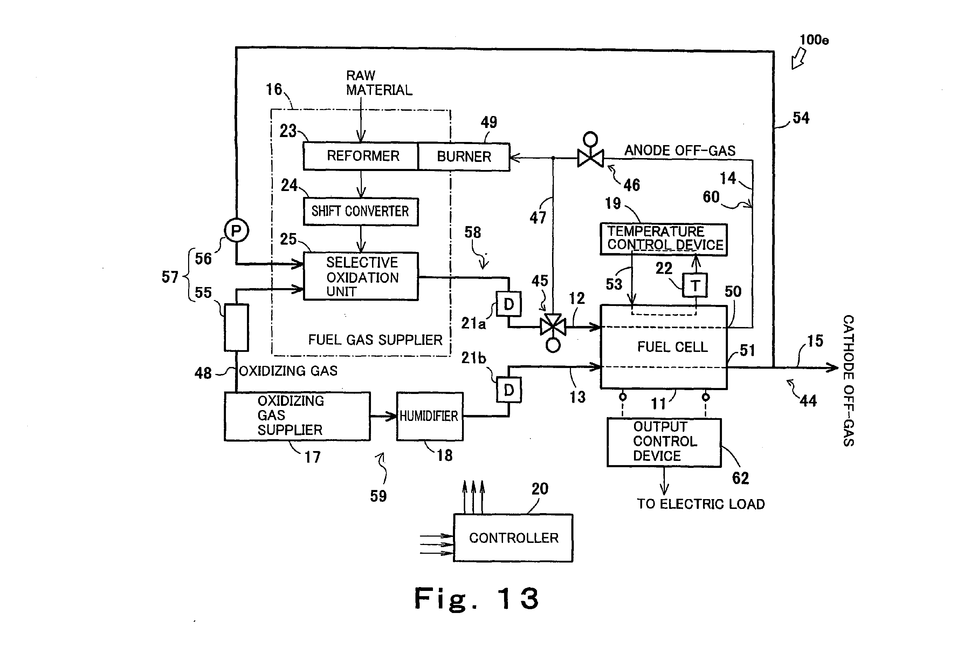

Next, referring to Fig. 13, a second modification of the fuel cell system according to the second embodiment of the present invention will be described.

Fig. 13 is a block diagram schematically illustrating a third configuration of the fuel cell system according to the second embodiment of the present invention.

The third configuration of the fuel cell system according to the second embodiment of the present invention is the same as that of the fuel cell system 100c (shown in Fig. 9), with the exception that neither the first three-way valve 43 nor the second three-way valve 44 (shown in Fig. 9) is provided and, in addition, the oxidizing-reaction oxidizing gas is supplied to the selective oxidation unit 25 of the fuel gas supplier 16 from the oxidizing gas supplier 17. Accordingly, here, a description will be made with respect to the difference between the third configuration of the fuel cell system and the configuration of the fuel cell system 100c shown in Fig. 9, and the description with respect to portions in common is omitted.

Referring to Fig. 13, there is shown a fuel cell system 100e in which the oxidizing-reaction oxidizing gas is supplied through the oxidizing-reaction oxidizing gas supply path 48 to the selective oxidation unit 25 of the fuel gas supplier 16 from the oxidizing gas supplier 17. The oxidizing-reaction oxidizing gas supply path 48 is provided with a variable orifice 55 as a flow rate regulator for regulating the supply amount of or the flow rate of oxidizing-reaction oxidizing gas supplied to the selective oxidation unit 25. On the other hand, in the fuel cell system 100e, the cathode off-gas discharged from the oxidizing gas outlet port 51 of the fuel cell 11 is supplied through the cathode off-gas supply path 54 to the selective oxidation unit 25 of the fuel gas supplier 16. The cathode off-gas supply path 54 is a cathode off-gas passage which is branched off from the cathode off-gas discharge path 15 connected to the oxidizing gas outlet port 51 of the fuel cell 11. The cathode off-gas supply path 54 is provided with a pump 56 for regulating the supply amount of or the flow rate of cathode off-gas supplied to the selective oxidation unit 25, and for forcibly feeding cathode off-gas. The variable orifice 55 and the pump 56 together form a selective gas supply unit 57.

And, during the electric power generation of the fuel cell 11, the variable orifice 55 is opened to a predetermined opening degree, and the oxidizing-reaction oxidizing gas is supplied to the selective oxidation unit 25 of the fuel gas supplier 16 from the oxidizing gas supplier 17. At this time, no cathode off-gas will flow into the cathode off-gas supply path 54 because the pump 56 is shut down and the fuel gas present in the selective oxidation unit 25 will not flow into or flow back to the cathode off-gas supply path 54.

Besides, when supplying the cathode off-gas to the selective oxidation unit 25 of the fuel gas supplier 16 during the shutdown operation of the fuel cell system 100e, the controller 20 causes the pump 56 to operate so that cathode off-gas is force-fed through the cathode off-gas supply path 54 to the selective oxidation unit 25, and places the variable orifice 55 in the closed state. This results in the supply of cathode off-gas rich in moisture to the selective oxidation unit 25 of the fuel gas supplier 16, thereby increasing the dew point of fuel gas supplied to the fuel cell 11 from the selective oxidation unit 25. In addition, the amount of the supply of cathode off-gas to the selective oxidation unit 25 is regulated by the force-feed capability of the pump 56.

Besides, when stopping the supply of cathode off-gas to the selective oxidation unit 25 of the fuel gas supplier 16 during the shutdown operation of the fuel cell system 100e, the controller 20 causes the pump 56 to shut down to thereby stop the supply of cathode off-gas to the selective oxidation unit 25. As described above, during the shutdown operation and the shutdown of the fuel cell system 100e, the polymer electrolyte membrane 1 of the fuel cell 11 is well humidified by moisture contained in the fuel gas and is maintained in an adequate humidification state. Therefore, the degradation of the polymer electrolyte membrane 1 mounted in the fuel cell 11 is suppressed to thereby contribute to the extension of the life of the fuel cell 11.

Besides, here, although the description has been made with respect to a manner in which the variable orifice 55 is provided as a flow rate regulator, such manner should not be deemed limitative. For example, it may be possible to use, as a flow rate regulator, a fixed orifice and an on-off valve. Even in this manner, the same advantageous effects as accomplished by the present embodiment can be accomplished.
In addition, although, in the present embodiment, the selective gas supply unit 52, 57 completely selectively supplies oxidizing-reaction oxidizing gas or cathode off-gas to the selective oxidation unit 25 of the fuel gas supplier 16, it may be possible to supply the both gases at a predetermined mixing ratio. In the present embodiment, the gas is supplied, in this way, to the selective oxidation unit 25 of the fuel gas supplier 16 by the selective gas supply unit 52, 57 includes not only a case in which oxidizing-reaction oxidizing gas or cathode off-gas is completely selectively supplied but also a case in which the both gases are supplied at a predetermined mixing ratio.

### THIRD EMBODIMENT

In the first and the second embodiments of the present invention, the description has been made with respect to the manner in which the fuel cell system is equipped with a fuel gas supplier. On the other hand, in the case of employing a fuel cell system as a drive electric power source for an electric vehicle, a hydrogen cylinder is usually used as a substitute for a fuel gas supplier. Therefore, in the third embodiment of the present invention, a description will be made with respect to an embodiment in which the fuel cell system includes, in place of a fuel gas supplier, a hydrogen cylinder.

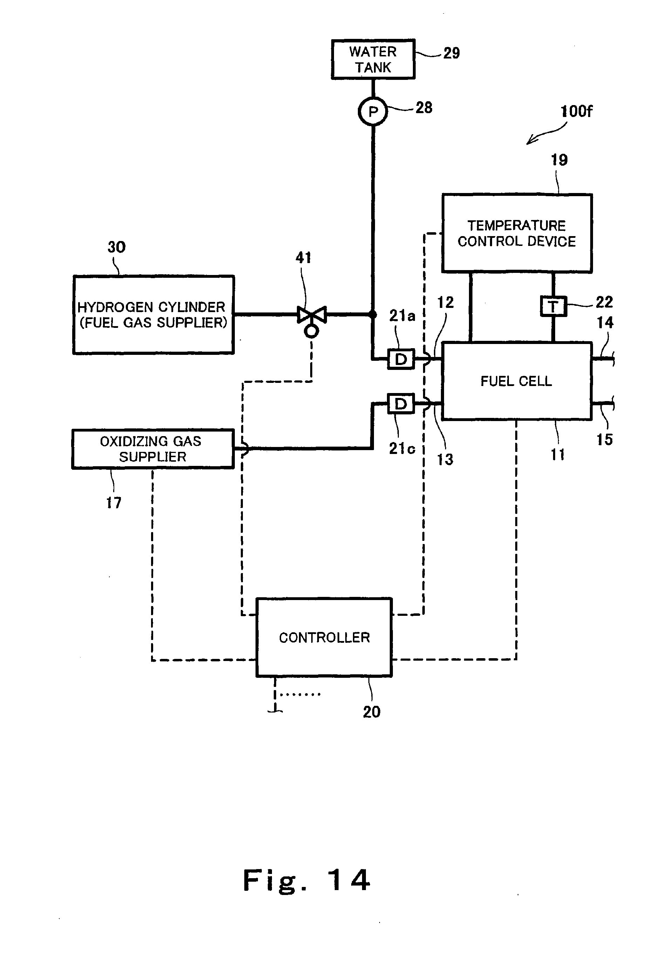

First, with reference to Fig. 14, a description will be made with respect to a first configuration of a fuel cell system according to the third embodiment of the present invention and with respect to its operation.

Fig. 14 is a block diagram schematically illustrating the first configuration of the fuel cell system according to the third embodiment of the present invention. It should be noted that Fig. 14 selectively shows only constituent components necessary for describing the present invention, and the diagrammatic representation of the remaining other constituent components is omitted. Besides, also in the present embodiment, the cross sectional structure of a fuel cell provided in the fuel cell system is exactly the same as the cross sectional structure of a fuel cell provided in the fuel cell system according to the first embodiment. In the following description, a description about the cross sectional structure of the fuel cell provided in the fuel cell system is omitted accordingly.
Besides, the fuel cell system according to the present embodiment has the same configuration as the fuel cell system 100a shown in Fig. 2, with the exception of the following differences: the fuel gas supplier 16 and the on-off valves 26 and 27, and the humidifier 18 (see Fig. 2) are not provided; hydrogen (fuel gas) is supplied to the fuel cell from a hydrogen cylinder; and the supply of water is provided to hydrogen from the hydrogen cylinder. Accordingly, in the present embodiment, a description will be made with respect to the difference between the first configuration of the fuel cell system and the configuration of the fuel cell system 100a shown in Fig. 2, and a description with respect to portions in common therebetween is omitted.
As shown in Fig. 14, in a fuel cell system 100f according to the present embodiment, the hydrogen (fuel gas) is supplied through the on-off valve 41 (a hydrogen supply mechanism ) to the dew point sensor 21a from a hydrogen cylinder 30 (a fuel gas supply unit). Here, the operation of the on-off valve 41 is controlled by the controller 20, whereby the supply amount of or the flow rate of hydrogen supplied to the dew point sensor 21a from the hydrogen cylinder 30 is controlled. Besides, in the fuel cell system 100f, the oxidizing gas is supplied to the dew point sensor 21c from the oxidizing gas supplier 17. Meanwhile, in the fuel cell system 100f, the water is supplied through the water supply pump 28 to the dew point sensor 21a from the water tank 29, as shown in Fig. 14. More specifically, water supplied through the water supply pump 28 from the water tank 29 is introduced to hydrogen supplied through the on-off valve 41 from the hydrogen cylinder 30. That is, the fuel cell system 100f according to the present embodiment is configured such that hydrogen from the hydrogen cylinder 30 and water from the water tank 29 can be supplied to the dew point sensor 21a at the same time. Here, the operation of the water supply pump 28 is controlled by the controller 20, whereby the supply amount of or the flow rate of water supplied to the dew point sensor 21a from the water tank 29 is controlled.

And, during the electric power generation of the fuel cell 11, the on-off valve 41 is opened to a predetermined opening degree and the hydrogen (fuel gas) is supplied through the dew point sensor 21a and then through the fuel gas supply path 12 to the anode of the fuel cell 11 from the hydrogen cylinder 30. At this time, there is no inflow of hydrogen to the water tank 29 from the hydrogen cylinder 30 because the water supply pump 28 is shut down. Besides, during the electric power generation of the fuel cell 11, the supply, to the cathode of the fuel cell 11, of oxidizing gas is provided through the dew point sensor 21 c from the oxidizing gas supplier 17.

Besides, when supplying water to hydrogen supplied from the hydrogen cylinder 30 during the shutdown operation of the fuel cell system 100f, the controller 20 causes the water supply pump 28 to operate so that water is force-fed to the dew point sensor 21 a from the water tank 29. As a result of this, water from the water tank 29 is fed to hydrogen from the hydrogen cylinder 30, thereby increasing the dew point of fuel gas supplied to the fuel cell 11 from the dew point sensor 21a. In addition, the supply amount of water to hydrogen from the hydrogen cylinder 30 is regulated by the force-feed capability of the water supply pump 28. Besides, at this time, the on-off valve 41 is opened to a predetermined opening degree, but there is no inflow of water to the hydrogen cylinder 30 because hydrogen is supplied towards the dew point sensor 21a from the hydrogen cylinder 30.

Besides, when stopping the supply of water to hydrogen from the hydrogen cylinder 30 during the shutdown operation of the fuel cell system 100f, the controller 20 causes the operation of the water supply pump 28 to stop to thereby bring the supply of water to hydrogen from the hydrogen cylinder 30 to a stop. As described above, during the shutdown operation and the shutdown of the fuel cell system 100f, the polymer electrolyte membrane 1 of the fuel cell 11 is well humidified by moisture contained in the fuel gas and will be maintained in an adequate humidification state. Therefore, by the present embodiment, the degradation of the polymer electrolyte membrane 1 mounted in the fuel cell 11 is suppressed to thereby contribute to the extension of the life of the fuel cell 11.

Besides, in the present embodiment, although the description has been made with respect to an embodiment in which hydrogen from the hydrogen cylinder 30 is supplied with liquid water, such a manner should not be deemed limitative. For example, it may be possible to employ a manner in which the fuel cell system 100f includes a spray for atomizing liquid water, and water atomized by the spray is supplied to hydrogen from the hydrogen cylinder 30. Even in this manner, the same advantageous effects as accomplished by the present embodiment can be accomplished.

Furthermore, the rest is the same as the first and the second embodiments.

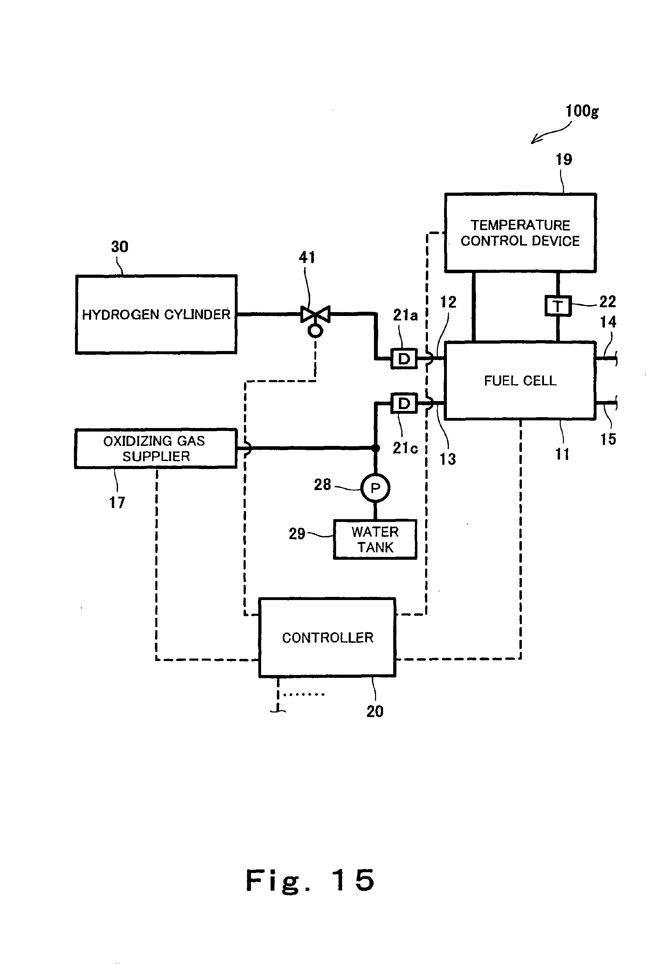

Next, referring to Fig. 15, a second configuration of the fuel cell system according to the third embodiment of the present invention will be described.

Fig. 15 is a block diagram schematically illustrating the second configuration of the fuel cell system according to the third embodiment of the present invention.
As shown in Fig. 15, a fuel cell system 100g according to the third embodiment of the present invention has a configuration basically identical with the configuration of the fuel cell system 100f (Fig. 14). That is, the fuel cell system 100g includes a hydrogen cylinder 30, an on-off valve 41, an oxidizing gas supplier 17, a dew point sensor 21a, a dew point sensor 21c, a fuel cell 11, a temperature control device 19, a temperature sensor 22 and a controller 20. And, the fuel cell system 100g is configured such that the supply, to the fuel cell 11, of hydrogen from the hydrogen cylinder 30 is provided through the on-off valve 41 and then through the dew point sensor 21a and the supply, to the fuel cell 11, of oxidizing gas from the oxidizing gas supplier 17 is provided through the dew point sensor 21c. Besides, the fuel cell system 100g is configured such that the temperature of the fuel cell 11 is controlled by the temperature control device 19 and the operations of the fuel cell system 100g are suitably controlled by the controller 20.

On the other hand, contrary to the fuel cell system 100f which is configured such that the water is supplied from the water tank 29 through the water supply pump 28 to hydrogen from the hydrogen cylinder 30, the fuel cell system 100g according to the present embodiment is configured such that the water is supplied from the water tank 29 through the water supply pump 28 to oxidizing gas from the oxidizing gas supplier 17, as shown in Fig. 15. In addition, the rest is the same as the fuel cell system 100f shown in Fig. 14.
Even when configured such that the water is supplied from the water tank 29 through the water supply pump 28 to oxidizing gas from the oxidizing gas supplier 17, the polymer electrolyte membrane 1 of the fuel cell 11 is well humidified by moisture contained in the oxidizing gas during the shutdown operation and the shutdown of the fuel cell system 100g. Therefore, the same advantageous effects as accomplished by the present embodiment can be accomplished.

In addition, although in the present embodiment, the description has been made with respect to an embodiment in which the dew point sensor 21a and the dew point sensor 21c are used to detect the fuel gas dew point Tda and the oxidizing gas dew point Tdc, such an embodiment should not be deemed limitative. For example, it may be possible to employ an embodiment that uses, as the fuel gas dew point Tda, a dew point calculated based on parameters such as the amount of hydrogen supplied from the hydrogen cylinder 30, the amount of water supplied from the water tank 29, or other like parameter. In this case, based on the value detected by the temperature sensor 22 and on the elapsed time since the start of the supply of water from the water tank 29, the controller 20 makes a decision on the magnitude relation between the fuel gas dew point Tda and the temperature, Tcell, of the fuel cell 11. Besides, for example, it may be possible to employ an embodiment that uses, as the oxidizing gas dew point Tdc, a dew point calculated based on parameters such as the amount of oxidizing gas supplied from the oxidizing gas supplier 17, the amount of water supplied from the water tank 29, or other like parameter. In this case, based on the value detected by the temperature sensor 22 and on the elapsed time since the start of the supply of water from the water tank 29, the controller 20 makes a decision on the magnitude relation between the oxidizing gas dew point Tdc and the temperature, Tcell, of the fuel cell 11.

### FOURTH EMBODIMENT

In the third embodiment of the present invention, the description has been made with respect to an embodiment in which the fuel cell system is equipped with a hydrogen cylinder. Contrary to this embodiment, in the case where hydrogen supplied from a hydrogen cylinder is supplied with water from a water tank, it is much preferable to employ an embodiment in which water from the water tank is first heated to appropriate temperature and then supplied to hydrogen from the hydrogen cylinder in the light of effectively increasing the dew point, Tda, of hydrogen (fuel gas) and the dew point, Tdc, of oxidizing gas. Therefore, in the fourth embodiment of the present invention, a description will be made with respect to an embodiment in which the fuel cell system includes, in addition to the hydrogen cylinder, a heating means for heating water from the water tank, and with respect to an embodiment in which the fuel cell system includes, in addition to the fuel gas supplier, a heating means for heating water from the water tank.

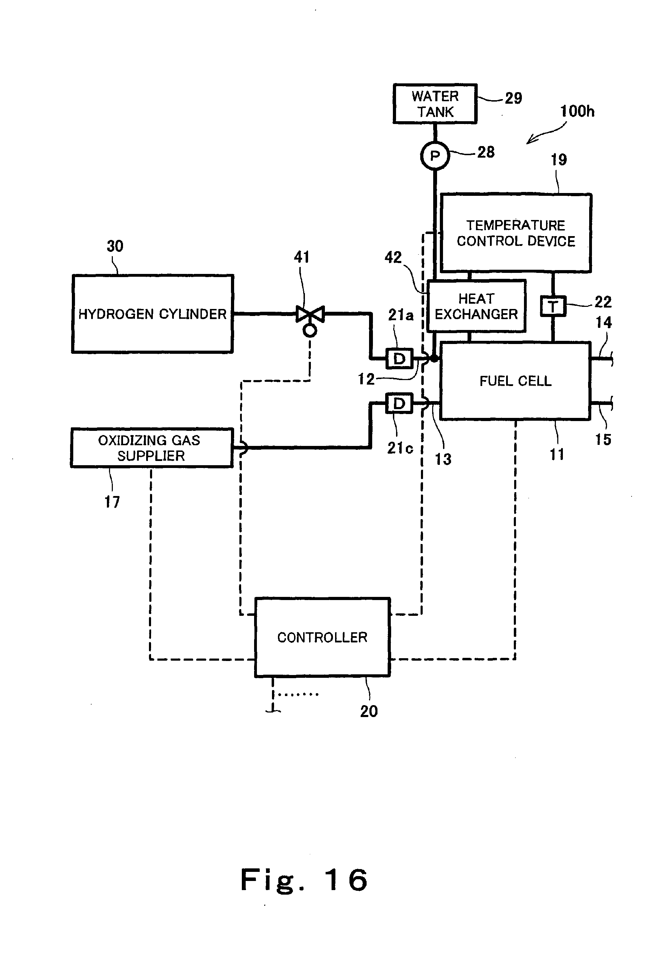

In the first place, referring to Fig. 16, a first configuration of the fuel cell system according to the fourth embodiment of the present invention and its operation will be described.
Fig. 16 is a block diagram schematically illustrating the first configuration of the fuel cell system according to the fourth embodiment of the present invention. It should be noted that Fig. 16 selectively shows only constituent components necessary for describing the present invention, and the diagrammatic representation of the remaining other constituent components is omitted. Besides, also in the present embodiment, the cross sectional structure of the fuel cell provided in the fuel cell system is exactly the same as the cross sectional structure of the fuel cell provided in the fuel cell system according to the first embodiment. Therefore, in the following description, a description with regard to the cross sectional structure of the fuel cell provided in the fuel cell system is omitted.

Besides, the first configuration of the fuel cell system according to the present embodiment is the same as the fuel cell system 100f shown in Fig. 14, with the exception of the following differences: in addition to the configuration of the fuel cell system 100f shown in Fig. 14, there is further provided a heat exchanger; water supplied from the water tank 29 is heated in the heat exchanger; and the water thus heated is supplied to hydrogen from the hydrogen cylinder 30. Accordingly, here, a description will be made with respect to the difference between the first configuration of the fuel cell system and the configuration of the fuel cell system 100f shown in Fig. 14, and a description with respect to portions in common therebetween is omitted.

As shown in Fig. 16, in a fuel cell system 100h according to the present embodiment, the hydrogen as the fuel gas is supplied from the hydrogen cylinder 30 as a fuel gas supply unit through the on-off valve 41 as a hydrogen supply mechanism to the dew point sensor 21a. Here, the operation of the on-off valve 41 is controlled by the controller 20, whereby the amount of or the rate of flow of hydrogen supplied to the dew point sensor 21a from the hydrogen cylinder 30 is controlled. Besides, in the fuel cell system 100f, the oxidizing gas is supplied to the dew point sensor 21 c from the oxidizing gas supplier 17. Meanwhile, as shown in Fig. 16, in the fuel cell system 100h the water from the water tank 29 is supplied through the water supply pump 28 and then through the heat exchanger 42 to hydrogen (from the hydrogen cylinder 30) past the dew point sensor 21a. Here, the heat exchanger 42 is configured such that the exchange of heat is effected between cooling medium circulating between the temperature control device 19 and the fuel cell 11 and water discharged from the water supply pump 28 whereby the water supplied from the water tank 29 is heated. That is, the fuel cell system 100h according to the present embodiment is configured such that the water supplied from the water tank 29 and heated by the heat exchanger 42 can be supplied to hydrogen after passage through the dew point sensor 21a. Here, the operation of the water supply pump 28 is controlled by the controller 20, whereby the amount of water supplied from the water tank 29 to the heat exchanger 42 is controlled.

And, during the electric power generation of the fuel cell 11, the on-off valve 41 is opened to a predetermined opening degree, and the hydrogen as a fuel gas is supplied through the dew point sensor 21a and then through the fuel gas supply path 12 to the anode of the fuel cell 11 from the hydrogen cylinder 30. At this time, there is no inflow of hydrogen to the water tank 29 from the hydrogen cylinder 30 because the water supply pump 28 is shut down. Besides, during the electric power generation of the fuel cell 11, the oxidizing gas is supplied through the dew point sensor 21c to the cathode of the fuel cell 11 from the oxidizing gas supplier 17.

Besides, when supplying water to the hydrogen supplied from hydrogen cylinder 30 during the shutdown operation of the fuel cell system 100h, the controller 20 causes the water supply pump 28 to operate so that water is force-fed from the water tank 29 to downstream of the dew point sensor 21 a. This results in the supply of water heated by the heat exchanger 42 to hydrogen from the hydrogen cylinder 30, whereby the dew point of fuel gas supplied to the fuel cell 11 is effectively increased. In addition, the amount of water supplied to hydrogen from the hydrogen cylinder 30 is regulated by the force-feed capability of the water supply pump 28, as in the case of the third embodiment. Besides, at this time, although the on-off valve 41 is opened to a predetermined opening degree, there is no inflow of water to the hydrogen cylinder 30 because the hydrogen is supplied to the dew point sensor 21a from the hydrogen cylinder 30.

Besides, when stopping the supply of water to hydrogen from the hydrogen cylinder 30 during the shutdown operation of the fuel cell system 100h, the controller 20 causes the water supply pump 28 to stop operating to thereby stop the supply of water to hydrogen from the hydrogen cylinder 30. As described above, during the shutdown operation and the shutdown of the fuel cell system 100h, the polymer electrolyte membrane 1 of the fuel cell 11 is well humidified by moisture contained in hydrogen as a fuel gas and will be maintained in an adequate humidification state. Therefore, even by the present embodiment, the degradation of the polymer electrolyte membrane 1 mounted in the fuel cell 11 is suppressed to thereby contribute to the extension of the life of the fuel cell 11.

Besides, although in the present embodiment the description has been made with respect to an embodiment in which hydrogen from the hydrogen cylinder 30 is supplied with liquid, heated water, such an embodiment should not be deemed limitative. For example, it may be possible to employ an embodiment in which the fuel cell system 100h includes, at the downstream side of the heat exchanger 42, a spray for atomizing liquid water, and heated water atomized by the spray is fed to hydrogen from the hydrogen cylinder 30. Even in such an embodiment, the same advantageous effects as accomplished by the present embodiment can be accomplished.

In addition, the position of the exchange of heat between cooling medium circulating between the temperature control device 19 and the fuel cell 11 and water fed from the water tank 29 (i.e., the position where the heat exchanger 42 is disposed) in the fuel cell system 100h according to the present embodiment may be any position as long as such heat exchange is effected. However, in the light of effectively heating water from the water tank 29, the heat exchanger 42 is preferably disposed at a position of the cooling medium circulating path where the cooling medium has a higher level of temperature. That is, it is preferred that the heat exchanger 42 be disposed at a portion of the cooling medium circulating path on the side of the outlet port of the fuel cell 11 and on the side of the inlet port of the temperature control device 19. This makes it possible for the cooling medium to more effectively heat water from the water tank 29 in the fuel cell system 100h.

Besides, the rest is the same as the first to the third embodiments.

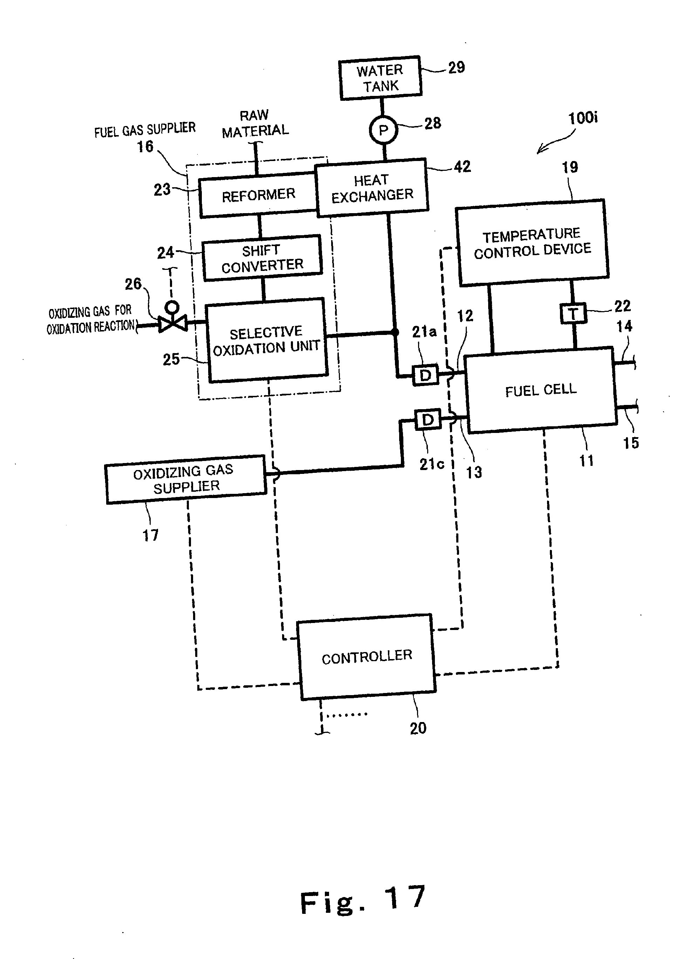

Next, referring to Fig. 17, a description will be made with respect to a second configuration of the fuel cell system according to the fourth embodiment and its operation.

Fig. 17 is a block diagram schematically illustrating a second configuration of the fuel cell system according to the fourth embodiment of the present invention.
As can be seen from Fig. 17, a fuel cell system 100i according to the fourth embodiment of the present invention has a configuration basically identical with the configuration of the fuel cell system 100f (see Fig. 14). That is, the fuel cell system 100i includes a fuel gas supplier 16 (as a substitute for the hydrogen cylinder 30), an on-off valve 26 (as a substitute for the on off valve 41), a water tank 29, a water supply pump 28, an oxidizing gas supplier 17, a dew point sensor 21a, a dew point sensor 21c, a fuel cell 11, a temperature control device 19, a temperature sensor 22, and a controller 20. And, the fuel cell system 100i is configured such that the fuel gas is supplied, through the dew point sensor 21 a, to the fuel cell 11 from the fuel gas supplier 16 while the oxidizing gas is supplied, through the dew point sensor 21 c, to the fuel cell 11 from the oxidizing gas supplier 17. Besides, the fuel cell system 100i is configured such that the temperature of the fuel cell 11 is controlled by the temperature control device 19 and the operations of the fuel cell system 100i are suitably controlled by the controller 20.

On the other hand, contrary to the fuel cell system 100h (see Fig. 16) that is configured such that, after being heated by the heat exchanger 42 which uses the cooling medium of the fuel cell 11 as a heat source, water from the water tank 29 is fed to hydrogen from the hydrogen cylinder 30, the fuel cell system 100i according to the present embodiment is configured such that, after being heated by the heat exchanger 42 which uses the reformer 23 as a heat source, water from the water tank 29 is fed to hydrogen from the selective oxidation unit 25, as shown in Fig. 17. In addition, the rest is the same as in the fuel cell system 100f shown in Fig. 16.

Even in such a configuration that the water is supplied, through the water supply pump 28 and then through the heat exchange 42 whose heat source is the reformer 23, to fuel gas from the fuel gas supplier 16, from the water tank 29, the polymer electrolyte membrane 1 of the fixel cell 11 is well humidified by moisture contained in the fuel gas during the shutdown operation and the shutdown of the fuel cell system 100i. Therefore, even when employing such a configuration, it is possible to obtain the same advantageous effects as obtained by the fuel cell system 100h (see Fig. 16).
In addition, in the fuel cell system 100h according to the present embodiment, the description has been made with respect to an embodiment in which the dew point sensor 21a and the dew point sensor 21c are used to detect the fuel gas dew point Tda and the oxidizing gas dew point Tdc. However, such an embodiment should not be deemed limitative. For example, it is possible to employ an embodiment that uses, as the fuel gas dew point Tda, a dew point calculated based on parameters such as the amount of hydrogen supplied from the hydrogen cylinder 30, the amount of water supplied from the water tank 29, and other like parameter. In this case, based on the value detected by the temperature sensor 22 and on the elapsed time since the start of the supply of water from the water tank 29, the controller 20 makes a decision on the magnitude relation between the fuel gas dew point Tda and the temperature, Tcell, of the fuel cell 11. Besides, for example, it is possible to employ an embodiment that uses, as the oxidizing gas dew point Tdc, a dew point calculated based on parameters such as the amount of oxidizing gas supplied from the oxidizing gas supplier 17, the amount of water supplied from the water tank 29, and other like parameter. In this case, based on the value detected by the temperature sensor 22 and on the elapsed time since the start of the supply of water from the water tank 29, the controller 20 makes a decision on the magnitude relation between the oxidizing gas dew point Tdc and the temperature, Tcell, of the fuel cell 11.

### INDUSTRIAL APPLICABILITY

The fuel cell system according to the present invention and its operation method have industrial applicability as a fuel cell system of high durability which is able to effectively suppress, by controlling the dew point of fuel gas by a simple configuration, the degradation of the polymer electrolyte membrane when the polymer electrolyte fuel cell, which is operated in a low humidification state, changes its state to the open circuit state, and as its operation method.

Besides, the fuel cell system according to the present invention and its operation method have industrial applicability as a fuel cell system and as its operation method for suitable use in an electric vehicle's drive electric power source that requires high output characteristics and quick start-up as well as in a household cogeneration system that requires long term reliability.

## Claims

1. A fuel cell system comprising:
a fuel cell configured to generate electric power using fuel gas containing hydrogen and oxidizing gas containing oxygen;
a fuel gas supplier configured to supply the fuel gas to said fuel cell;
an oxidizing gas supplier configured to supply the oxidizing gas to said fuel cell; and
a controller configured to at least control said fuel cell, said fuel gas supplier and said oxidizing gas supplier;
wherein said fuel cell system further comprises a moisture supply mechanism configured to supply moisture to at least one of an anode and a cathode of said fuel cell;
and wherein said controller is configured to control said moisture supply the mechanism based on at least one of either a dew point of the fuel gas or information related to the dew point of the fuel gas and either a dew point of the oxidizing gas or information related to the dew point of the oxidizing gas so as to increase at least one of the dew point of the fuel gas and the dew point of the oxidizing gas, in order to supply moisture to at least one of said anode and said cathode of said fuel cell before cutting off electric connection between said fuel cell and a load, and is configured to thereafter cut off the electric connection between said fuel cell and said load.

2. The fuel cell system as set forth in claim 1,
wherein said fuel gas supplier comprises: a reformer configured to generate a fuel gas containing carbon monoxide using a raw material through a reforming reaction, a shift converter configured to decrease carbon monoxide in the fuel gas generated in said reformer through a shift reaction, and a selective oxidation unit configured to further decease the carbon monoxide in the fuel gas with its carbon monoxide decreased in said shift converter through a selective oxidation reaction, and
wherein said moisture supply mechanism is a selective oxidation moisture supply mechanism configured to supply moisture to said selective oxidation unit.

3. The fuel cell system as set forth in claim 2,
wherein said selective oxidation unit includes:
a selective oxidation air supply path used for supplying selective oxidation air to the fuel gas with its carbon monoxide decreased in said shift converter;
a mixing section configured to mix the selective oxidation air delivered through said selective oxidation air supply path and the fuel gas with its carbon monoxide decreased in said shift converter; and
a selective oxidation catalytic unit configured to, using a mixture gas of the fuel gas and the selective oxidation air, obtained by mixing in said mixing section, reduce the carbon monoxide in the mixture gas through the selective oxidation reaction;
wherein said selective oxidation moisture supply mechanism is configured to supply the moisture to either said selective oxidation air supply path or to said mixing section.

4. The fuel cell system as set forth in claim 3,
wherein said selective oxidation moisture supply mechanism includes:
a water tank configured to store water;
a moisture supply path for providing communication between said water tank and said selective oxidation unit; and
a moisture content regulation unit disposed in said moisture supply path.

5. The fuel cell system as set forth in claim 2, further comprising:
a selective oxidation air supply unit configured to supply selective oxidation air to said selective oxidation unit;
wherein said selective oxidation moisture supply mechanism includes:
a cathode off-gas bypass path used for supplying cathode off-gas containing unused oxidizing gas discharged from said fuel cell, to said selective oxidation unit; and
a selective oxidation air regulation unit configured to supply at least one of the cathode off-gas delivered through said cathode off-gas bypass path and the selective oxidation air supplied from said selective oxidation air supply unit, to said selective oxidation unit .

6. The fuel cell system as set forth in claim 2, further comprising:
a selective oxidation air supply unit configured to supply selective oxidation air to said selective oxidation unit,
wherein said controller is configured to control at least one of said selective-oxidization air supply unit and said selective oxidation moisture supply mechanism to make the temperature of said selective oxidation unit equal to or higher than a predetermined threshold, when controlling said selective oxidation moisture supply mechanism so that the moisture is supplied to the selective oxidation unit.

7. The fuel cell system as set forth in claim 2,
wherein said controller is configured to perform control to cause said selective oxidation unit to be filled therein with the fuel gas, after cutting off the electric connection between said fuel cell and said load.

8. The fuel cell system as set forth in claim 1, further comprising:
a water tank for storing water;
a second moisture supply path for providing communication between said water tank and at least one of said anode and said cathode of said fuel cell; and
a second moisture content regulation unit disposed in said second moisture supply path;
wherein said moisture supply mechanism is a fuel-cell moisture supply mechanism configured to supply the moisture from the water tank to at least one of said anode and said cathode of said fuel cell.

9. The fuel cell system as set forth in claim 8, further comprising:
a temperature control device configured to control a temperature of said fuel cell,
an annular heating medium path used for circulating a heating medium between said temperature control device and said fuel cell to transfer heat from said fuel cell to said temperature control device; and
a heat exchanger;
wherein said heat exchanger is configured to exchange heat between said annular heating medium path and said second moisture supply path.

10. The fuel cell system as set forth in claim 8,
wherein said fuel gas supplier comprises:
a reformer configured to generate a fuel gas containing carbon monoxide using a raw material through a reforming reaction; and
a heat exchanger;
wherein said heat exchanger is configured to exchange heat between said reformer and said second moisture supply path

11. The fuel cell system as set forth in claim 1,
wherein said controller is configured to perform control such that the dew point of the fuel gas and the dew point of the oxidizing gas are lower than the temperature of said fuel cell, during an electric power generation operation of said fuel cell system.

12. The fuel cell system as set forth in claim 1,
wherein said controller is configured to control said moisture supply mechanism based on at least one of either the dew point of the fuel gas or the information related to the dew point of the fuel gas and either the dew point of the oxidizing gas or the information related to the dew point of the oxidizing gas so as to increase at least one of the dew point of the fuel gas and the dew point of the oxidizing gas to cause the temperature of said fuel cell to conform to the dew point of at least one of the fuel gas and the oxidizing gas, in order to supply the moisture to at least one of said anode and said cathode of said fuel cell before cutting off the electric connection between said fuel cell and the load, and is configured to thereafter cut off the electric connection between said fuel cell and said load.

13. The fuel cell system as set forth in claim 1,
wherein said controller is configured to control said moisture supply mechanism based on at least one of either the dew point of the fuel gas or the information related to the dew point of the fuel gas and either the dew point of the oxidizing gas or the information related to the dew point of the oxidizing gas so as to increase at least one of the dew point of the fuel gas and the dew point of the oxidizing gas, in order to supply the moisture to at least one of said anode and said cathode of said fuel cell before cutting off the electric connection between said fuel cell and the load; and
wherein said controller is configured to perform control such that the dew point of at least one of the fuel gas and the oxidizing gas is equal to or higher than the temperature of the fuel cell, when cutting off the electric connection between said fuel cell and the load.

14. A method of operating a fuel cell system including a fuel cell configured to generate electric power using fuel gas containing hydrogen and oxidizing gas containing oxygen; a fuel gas supplier configured to supply the fuel gas to said fuel cell; an oxidizing gas supplier configured to supply the oxidizing gas to said fuel cell; and a controller configured to at least control said fuel cell, said fuel gas supplier and said oxidizing gas supplier; wherein said fuel cell system further comprises a moisture supply mechanism configured to supply moisture to at least one of an anode and a cathode of said fuel cell; said method comprising:
controlling said moisture supply mechanism based on at least one of either a dew point of the fuel gas or information related to the dew point of the fuel gas and either a dew point of the oxidizing gas or information related to the dew point of the oxidizing gas so as to increase at least one of the dew point of the fuel gas and the dew point of the oxidizing gas, in order to supply the moisture to at least one of said anode and said cathode of said fuel cell before cutting off electric connection between said fuel cell and a load, and thereafter cutting off the electric connection between said fuel cell and said load.
